(19) Europäisches Patentamt / European Patent Office / Office européen des brevets

(11) **EP 2 945 411 B1**

(12) **EUROPEAN PATENT SPECIFICATION**

(45) Date of publication and mention of the grant of the patent:
**21.12.2016 Bulletin 2016/51**

(21) Application number: **14743340.3**

(22) Date of filing: **22.01.2014**

(51) Int Cl.:
**H04W 16/28** (2009.01)  **H04B 7/06** (2006.01)
**H04B 7/08** (2006.01)

(86) International application number:
**PCT/CN2014/071125**

(87) International publication number:
**WO 2014/114237 (31.07.2014 Gazette 2014/31)**

(54) **MILLIMETER WAVE PHASED-ARRAY WAVE BEAM ALIGNMENT METHOD AND COMMUNICATION DEVICE**

MILLIMETERWELLEN-PHASENGESTEUERTES STRAHLENAUSRICHTUNGSVERFAHREN UND KOMMUNIKATIONSVORRICHTUNG

PROCÉDÉ D'ALIGNEMENT DE FAISCEAU D'ONDES À COMMANDE DE PHASE ET ONDES MILLIMÉTRIQUES ET DISPOSITIF DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.01.2013 CN 201310023438**

(43) Date of publication of application:
**18.11.2015 Bulletin 2015/47**

(73) Proprietor: **Huawei Technologies Co., Ltd.
Longgang District
Shenzhen, Guangdong 518129 (CN)**

Inventor: **LIU, Pei
Shenzhen
Guangdong 518129 (CN)**

(74) Representative: **Epping - Hermann - Fischer
Patentanwaltsgesellschaft mbH
Schloßschmidstraße 5
80639 München (DE)**

(56) References cited:
**EP-A2- 1 992 083**    **EP-B1- 2 238 695**
**WO-A2-2010/085092**   **CN-A- 101 075 837**
**CN-A- 101 616 472**   **CN-A- 102 164 374**

- **JUNYI WANG ET AL: "Beam codebook based beamforming protocol for multi-Gbps millimeter-wave WPAN systems", IEEE JOURNAL ON SELECTED AREAS IN COMMUNICATIONS, IEEE SERVICE CENTER, PISCATAWAY, US, vol. 27, no. 8, 1 October 2009 (2009-10-01), pages 1390-1399, XP011277425, ISSN: 0733-8716, DOI: 10.1109/JSAC.2009.091009**

## Description

## TECHNICAL FIELD

The present invention relates to the field of communications technologies, and in particular, to a millimeter wave phased-array beam alignment method and a communications device.

## BACKGROUND

Document Junyi Wang et al: "Beam codebook based beamforming protocol for multi-Gbps millimeter-wave WPAN systems", IEEE JOURNAL ON SELECTED AREAS IN COMMUNIATIONS, IEEE SERVICE CENTER, PISCATAWAY, US, vol. 27, no. 8, 1 October 2009 (2009-10-01), pages 1390-1399, XP011277425, ISSN: 0733-8716, DOI: 10.1109/JSAC.2009.091009 relates to a beamforming (BF) protocol realized in media access control (MAC) layer on top of multiple physical layer (PHY) designs. The BF protocol targets to minimize the BF set-up time and to mitigate the high path loss of 60 GHz WPAN systems. It consists of 3 stages, namely the device (DEV) to DEV linking, sector-level searching and beam-level searching. The BF protocol is a complete design which is PHY-independent, employs discrete phase-shifters, and is applicable to different antenna configurations.

EP 2 238 695 B1 relates to a method for communicating a signal using analog beam forming, a transmitting station and a receiving station. Particularly, a method for communicating a signal to a receiving station from a transmitting station is described, said receiving station having an antenna array including N antennas, where N is at least 2, and said transmitting station having a transmitting antenna array including P antennas, where P is at least 2. The method comprises the steps of: (a) receiving from the transmitting station at the receiving station on each antenna a respective analog signal having a configuration field and a data field, said configuration field comprising a training symbol, noted L, repeated Q times, where Q = N+P, (b) at the receiving station, during the first N training symbol repetitions, adjusting at least one antenna parameter comprising a predetermined beam forming weight of the at least 2 antennas, (c) combining the at least two analog signals into a combined signal, (d) during each training symbol, the receiving station performing signal measurements on the combined signal, (e) computing the beam forming weights giving the highest signal to noise ratio in the space spanned by said predetermined beam forming weights as a function of the signal measurements, wherein said predetermined beam forming weights are orthogonal, (f) using the computed beam forming weights for receiving the data field, and (g) the receiving station indicates a bit rate to be used by the transmitting station in a next transmission signal, said bit rate being selected in dependence upon the computed beam forming weights.

Currently, it is specified in the widely applied Near Field Communication standard that frequency bands used by a device are mainly 2.4 GHz and 5 GHz frequency bands; however, the 60 GHz millimeter wave communications technology is becoming increasingly active. Compared with an existing frequency band, the 60 GHz millimeter wave communications technology can implement very-high-speed digital wireless transmission between electronic devices at a several gigabits per second (Gbps) level. In the future, a wireless communications device can work in three frequency bands: 2.4 GHz, 5 GHz, and 60 GHz; the 2.4 GHz and 5 GHz frequency bands are used to implement relatively low-speed data transmission, and the 60 GHz frequency band is used to implement high-speed data transmission.

A 60 GHz millimeter wave is located in one of attenuation peaks of a radio spectrum in atmospheric transmission, and undergoes heavy attenuation in space propagation. Restricted by factors such as technologies and costs for a millimeter wave component, transmit power of a small millimeter wave is restricted; therefore, a communication distance of the 60 GHz millimeter wave of an antenna with a single radiating element is relatively short. To increase a communication distance of a millimeter wave and implement high-speed data transmission, a phased-array directional beam antenna may be adopted to receive and transmit a millimeter wave signal. In a 60 GHz system, reduction of an antenna size enables multiple antennas to be conveniently configured on a single device, and configuration of a phased-array antenna facilitates beamforming.

Transmit and receive antennas perform beam scanning and searching. A transmitting device and a receiving device can communicate with each other only when a phased-array beam of the transmitting device and a phased-array beam of the receiving device are mutually aligned. In the prior art, a millimeter wave phased-array beam alignment method includes the following: A transmitting device transmits a signal to perform beam scanning and searching; after a receiving device receives the signal transmitted by the transmitting device, the original receiving device becomes a transmitting device, and the original transmitting device becomes a receiving device; beam scanning and searching are performed again; only after the original transmitting device receives a signal transmitted by the original receiving device, two devices can learn which direction the other party is in, so as to complete an entire beam searching process and implement phased-array beam alignment between the two devices. A method of exhaustion is adopted when beam searching is performed. Because no search target and no stop algorithm are specified during the searching, the transmitting device has to perform exhaustive searching to traverse all possible beam pointing directions before finding a communication beam pointing angle at which the receiving device is. Therefore, in the prior art, the phased-array beam alignment method is time-consuming and inefficient.

## SUMMARY

Embodiments of the present invention are defined by the claims. Embodiments of the present invention provide a millimeter wave phased-array beam alignment method and a communications device, which can improve phased-array beam alignment efficiency.

To resolve the foregoing technical problem, the embodiments of the present invention disclose the following technical solutions:

According to a first aspect, a millimeter wave phased-array beam alignment method is provided, including:

communicating, by a first device, with a second device over a low-band communication link to determine a search angle;

transmitting, by the first device, a first millimeter wave signal in a direction indicated by the search angle, to search for the second device, where the first millimeter wave signal is a high frequency millimeter wave signal;

receiving, by the first device, feedback information sent by the second device, where the second device sends the feedback information after receiving the first millimeter wave signal in the direction indicated by the search angle; and

determining, by the first device after receiving the feedback information, to implement millimeter wave phased-array beam alignment with the second device in the direction indicated by the search angle.

With reference to the foregoing first aspect, in a first possible implementation manner, the receiving, by the first device, feedback information sent by the second device includes:

receiving, by the first device in the direction indicated by the search angle, a second millimeter wave signal transmitted by the second device in the direction indicated by the search angle, where the second device transmits the second millimeter wave signal after receiving the first millimeter wave signal in the direction indicated by the search angle, and the second millimeter wave signal is a high frequency millimeter wave signal; and

the determining, by the first device after receiving the feedback information, to implement millimeter wave phased-array beam alignment with the second device in the direction indicated by the search angle is specifically:

determining, by the first device after receiving the second millimeter wave signal, to implement millimeter wave phased-array beam alignment with the second device in the direction indicated by the search angle.

With reference to the foregoing first aspect and/or the first possible implementation manner, in a second possible implementation manner, the receiving, by the first device, feedback information sent by the second device includes:

receiving, by the first device, the feedback information sent by the second device over the low-band communication link, where the feedback information is used to indicate that the second device receives the first millimeter wave signal in the direction indicated by the search angle.

With reference to the foregoing first aspect and/or the first possible implementation manner and/or the second possible implementation manner, in a third possible implementation manner, when multiple search angles are determined, the feedback information includes beam direction information of the first millimeter wave signal received by the second device; and

the determining, by the first device after receiving the feedback information, to implement millimeter wave phased-array beam alignment with the second device in the direction indicated by the search angle is specifically:

determining, by the first device after receiving the feedback information, to implement millimeter wave phased-array beam alignment with the second device in a beam direction that is of the first millimeter wave signal and in the feedback information. With reference to the foregoing first aspect and/or the first possible implementation manner and/or the second possible implementation manner and/or the third possible implementation manner, in a fourth possible implementation manner, before the communicating, by a first device, with a second device over a low-band communication link to determine a search angle, the method further includes:

when a distance between the first device and the second device is less than or equal to a distance threshold, transmitting, by the first device, a wide beam millimeter wave signal to search for the second device, where the wide beam millimeter wave signal is a high frequency millimeter wave signal;

receiving, by the first device, signal belonging information sent by the second device, where the signal belonging information includes an antenna sector of the first device to which the wide beam millimeter wave signal that is received by the second device belongs; and

determining, by the first device, an angle range, which is indicated by the antenna sector, as a search range; and

the communicating, by a first device, with a second device over a low-band communication link to determine a search angle is specifically:

communicating, by the first device, with the second device over the low-band communication link to determine the search angle within the search range.

With reference to the foregoing first aspect and/or the first possible implementation manner and/or the second possible implementation manner and/or the third possible implementation manner and/or the fourth possible implementation manner, in a fifth possible implementation manner, before the communicating, by a first device, with a second device over a low-band communication link to determine a search angle, the method further includes:

receiving, by the first device, height information of the second device over the low-band communication link; and

determining, by the first device, a search range according to height information of the first device and the height information of the second device; and

the communicating, by a first device, with a second device over a low-band communication link to determine a search angle is specifically:

communicating, by the first device, with the second device over the low-band communication link to determine the search angle within the search range.

According to a second aspect, a millimeter wave phased-array beam alignment method is provided, including:

transmitting, by a first device, a millimeter wave signal to search for a second device;

receiving, by the first device, feedback information that is sent by the second device over a low-band communication link, where the feedback information is used to indicate that the second device receives the millimeter wave signal transmitted by the first device, and the millimeter wave signal is a high frequency millimeter wave signal; and

determining, by the first device after receiving the feedback information, to implement millimeter wave phased-array beam alignment with the second device in a transmitting direction of the millimeter wave signal.

With reference to the foregoing second aspect, in a first possible implementation manner, when the first device transmits millimeter wave signals in multiple transmitting directions to search for the second device, the feedback information includes beam direction information of the millimeter wave signal received by the second device; and

the determining, by the first device after receiving the feedback information, to implement millimeter wave phased-array beam alignment with the second device in a transmitting direction of the millimeter wave signal is specifically:

determining, by the first device after receiving the feedback information, to implement millimeter wave phased-array beam alignment with the second device in a beam direction that is of the millimeter wave signal and in the feedback information.

With reference to the foregoing second aspect and/or the first possible implementation manner, in a second possible implementation manner, before the transmitting, by a first device, a millimeter wave signal to search for a second device, the method further includes:

when a distance between the first device and the second device is less than or equal to a distance threshold, transmitting, by the first device, a wide beam millimeter wave signal to search for the second device;

receiving, by the first device, signal belonging information sent by the second device, where the signal belonging information includes an antenna sector of the first device to which the wide beam millimeter wave signal that is received by the second device belongs, and the wide beam millimeter wave signal is a high frequency millimeter wave signal; and

determining, by the first device, an angle range, which is indicated by the antenna sector, as a search range; and

the transmitting, by a first device, a millimeter wave signal to search for a second device is specifically:

transmitting, by the first device, the millimeter wave signal within the search range to search for the second device.

With reference to the foregoing second aspect and/or the first possible implementation manner and/or the second possible implementation manner, in a third possible implementation manner, before the transmitting, by a first device, a millimeter wave signal to search for a second device, the method further includes:

receiving, by the first device, height information of the second device over the low-band communication link; and

determining, by the first device, a search range according to height information of the first device and the height information of the second device; and
the transmitting, by a first device, a millimeter wave signal to search for a second device is specifically:

transmitting, by the first device, the millimeter wave signal within the search range to search for the second device.

According to a third aspect, a millimeter wave phased-array beam alignment method is provided, including:

determining, by a first device, a search range within which a second device is searched for;
transmitting, by the first device, a first millimeter wave signal within the search range to search for the second device;
receiving, by the first device, a second millimeter wave signal transmitted by the second device, where the second device transmits the second millimeter wave signal after receiving the first millimeter wave signal; and
determining, by the first device after receiving the second millimeter wave signal, to implement millimeter wave phased-array beam alignment with the second device in a direction in which the second millimeter wave signal is received; where
both the first millimeter wave signal and the second millimeter wave signal are high frequency millimeter wave signals.

With reference to the foregoing third aspect, in a first possible implementation manner, the determining, by a first device, a search range within which a second device is searched for includes:

when a distance between the first device and the second device is less than or equal to a distance threshold, transmitting, by the first device, a wide beam millimeter wave signal to search for the second device, where the wide beam millimeter wave signal is a high frequency millimeter wave signal;
receiving, by the first device, signal belonging information sent by the second device, where the signal belonging information includes an antenna sector of the first device to which the wide beam millimeter wave signal that is received by the second device belongs; and
determining, by the first device, an angle range, which is indicated by the antenna sector, as the search range.

With reference to the foregoing third aspect and/or the first possible implementation manner, in a second possible implementation manner, the determining, by a first device, a search range within which a second device is searched for includes:

receiving, by the first device, height information of the second device over a low-band communication link; and
determining, by the first device, the search range according to height information of the first device and the height information of the second device.

According to a fourth aspect, a millimeter wave phased-array beam alignment method is provided, including:

communicating, by a second device, with a first device over a low-band communication link to determine a search angle;
receiving, by the second device in a direction indicated by the search angle, a first millimeter wave signal transmitted by the first device, where the first millimeter wave signal is a high frequency millimeter wave signal; and
sending, by the second device after receiving the first millimeter wave signal, feedback information to the first device, so that after receiving the feedback information, the first device determines to implement millimeter wave phased-array beam alignment with the second device in the direction indicated by the search angle.

With reference to the foregoing fourth aspect, in a first possible implementation manner, the sending, by the second device after receiving the first millimeter wave signal, feedback information to the first device includes:

transmitting, by the second device after receiving the first millimeter wave signal, a second millimeter wave signal in the direction indicated by the search angle, so that after receiving the second millimeter wave signal in the direction indicated by the search angle, the first device determines to implement millimeter wave phased-array beam alignment with the second device in the direction indicated by the search angle, where the second millimeter wave signal is a high frequency millimeter wave signal.

With reference to the foregoing fourth aspect and/or the first possible implementation manner, in a second possible implementation manner, the sending, by the second device after receiving the first millimeter wave signal, feedback information to the first device includes:

sending, by the second device after receiving the first millimeter wave signal, the feedback information to the first device over the low-band communication link, where the feedback information is used to indicate that the second device receives the first millimeter wave signal in the direction indicated by the search angle.

With reference to the foregoing fourth aspect and/or the first possible implementation manner and/or the second possible implementation manner, in a third possible implementation manner, when multiple search angles are determined, the feedback information includes beam direction information of the first millimeter wave signal received by the second device, so that after receiving the feedback information, the first device determines to implement millimeter wave phased-array beam alignment with the second device in a beam direction that is of the first millimeter wave signal and in the feedback information.

With reference to the foregoing fourth aspect and/or the first possible implementation manner and/or the second possible implementation manner and/or the third possible implementation manner, in a fourth possible implementation manner, before the communicating, by a second device, with a first device over a low-band communication link to determine a search angle, the method further includes:

when a distance between the second device and the first device is less than or equal to a distance threshold, receiving, by the second device, a wide beam millimeter wave signal transmitted by the first device, where the wide beam millimeter wave signal is a high frequency millimeter wave signal; and

sending, by the second device after receiving the wide beam millimeter wave signal, signal belonging information to the first device, where the signal belonging information includes an antenna sector of the first device to which the wide beam millimeter wave signal that is received by the second device belongs, so that the first device determines an angle range, which is indicated by the antenna sector, as a search range; and

the communicating, by a second device, with a first device over a low-band communication link to determine a search angle is specifically:

communicating, by the second device, with the first device over the low-band communication link to determine the search angle within the search range.

With reference to the foregoing fourth aspect and/or the first possible implementation manner and/or the second possible implementation manner and/or the third possible implementation manner and/or the fourth possible implementation manner, in a fifth possible implementation manner, before the communicating, by a second device, with a first device over a low-band communication link to determine a search angle, the method further includes:

sending, by the second device, height information of the second device to the first device over the low-band communication link, so that the first device determines a search range according to height information of the first device and the height information of the second device; and

the communicating, by a second device, with a first device over a low-band communication link to determine a search angle is specifically:

communicating, by the second device, with the first device over the low-band communication link to determine the search angle within the search range.

According to a fifth aspect, a millimeter wave phased-array beam alignment method is provided, including:

receiving, by a second device, a millimeter wave signal transmitted by a first device, where the millimeter wave signal is a high frequency millimeter wave signal; and

sending, by the second device after receiving the millimeter wave signal, feedback information to the first device over a low-band communication link, where the feedback information is used to indicate that the second device receives the millimeter wave signal transmitted by the first device, so that after receiving the feedback information, the first device determines to implement millimeter wave phased-array beam alignment with the second device in a transmitting direction of the millimeter wave signal.

With reference to the foregoing fifth aspect, in a first possible implementation manner, the feedback information includes beam direction information of the millimeter wave signal received by the second device, so that after receiving the feedback information, the first device determines to implement millimeter wave phased-array beam alignment with the second device in a beam direction that is of the millimeter wave signal and in the feedback information.

With reference to the foregoing fifth aspect and/or the first possible implementation manner, in a second possible implementation manner, before the receiving, by a second device, a millimeter wave signal transmitted by a first device, the method further includes:

when a distance between the second device and the first device is less than or equal to a distance threshold, receiving, by the second device, a wide beam millimeter wave signal transmitted by the first device, where the wide beam millimeter wave signal is a high frequency millimeter wave signal; and

sending, by the second device after receiving the wide beam millimeter wave signal, signal belonging information to the first device, where the signal belonging information includes an antenna sector of the first device to which the wide beam millimeter wave signal that is received by the second device belongs, so that the first device determines an angle range, which is indicated by the antenna sector, as a search range; and

the receiving, by a second device, a millimeter wave signal transmitted by a first device is specifically:

receiving, by the second device within the search range, the millimeter wave signal transmitted by the first device.

With reference to the foregoing fifth aspect and/or the first possible implementation manner and/or the second possible implementation manner, in a third possible implementation manner, before the receiving, by a second device, a millimeter wave signal transmitted by a first device, the method further includes:

sending, by the second device, height information of the second device to the first device over the low-band communication link, so that the first device determines a search range according to height information of the first device and the height information of the second device; and

the receiving, by a second device, a millimeter wave signal transmitted by a first device is specifically:

receiving, by the second device within the search range, the millimeter wave signal transmitted by the first device.

According to a sixth aspect, a millimeter wave phased-array beam alignment method is provided, including:

receiving, by a second device, a first millimeter wave signal transmitted by a first device within a determined search range; and

transmitting, by the second device after receiving the first millimeter wave signal, a second millimeter wave signal, so that after receiving the second millimeter wave signal, the first device determines to implement millimeter wave phased-array beam alignment with the second device in a direction in which the second millimeter wave signal is received, where both the first millimeter wave signal and the second millimeter wave signal are high frequency millimeter wave signals.

With reference to the foregoing sixth aspect, in a first possible implementation manner, before the receiving, by a second device, a first millimeter wave signal transmitted by a first device within a determined search range, the method further includes:

when a distance between the second device and the first device is less than or equal to a distance threshold, receiving, by the second device, a wide beam millimeter wave signal transmitted by the first device, where the wide beam millimeter wave signal is a high frequency millimeter wave signal; and

sending, by the second device after receiving the wide beam millimeter wave signal, signal belonging information to the first device, where the signal belonging information includes an antenna sector of the first device to which the wide beam millimeter wave signal that is received by the second device belongs, so that the first device determines an angle range, which is indicated by the antenna sector, as the search range.

With reference to the foregoing sixth aspect and/or the first possible implementation manner, in a second possible implementation manner, before the receiving, by a second device, a first millimeter wave signal transmitted by a first device within a determined search range, the method further includes:

sending, by the second device, height information of the second device to the first device over a low-band communication link, so that the first device determines the search range according to height information of the first device and the height information of the second device.

According to a seventh aspect, a communications device is provided, including:

an angle determining unit, configured to communicate with a second device over a low-band communication link to determine a search angle;

a signal transmitting unit, configured to transmit a first millimeter wave signal in a direction indicated by the search angle, to search for the second device, where the first millimeter wave signal is a high frequency millimeter wave signal;

a signal receiving unit, configured to receive feedback information sent by the second device, where the second device sends the feedback information after receiving the first millimeter wave signal in the direction indicated by the search angle; and

an aligning unit, configured to: after the signal receiving unit receives the feedback information, determine to implement millimeter wave phased-array beam alignment with the second device in the direction indicated by the search angle.

With reference to the foregoing seventh aspect, in a first possible implementation manner, the signal receiving unit is specifically configured to receive, in the direction indicated by the search angle, a second millimeter wave signal transmitted by the second device in the direction indicated by the search angle, where the second device transmits the second millimeter wave signal after receiving the first millimeter wave signal in the direction indicated by the search angle, and the second millimeter wave signal is a high frequency millimeter wave signal;

and

the aligning unit is specifically configured to: after the signal receiving unit receives the second millimeter wave signal, determine to implement millimeter wave phased-array beam alignment with the second device in the direction indicated by the search angle.

With reference to the foregoing seventh aspect and/or the first possible implementation manner, in a second possible implementation manner, the signal receiving unit is specifically configured to receive the feedback information sent by the second device over the low-band communication link, where the feedback information is used to indicate that the second device receives the first millimeter wave signal in the direction indicated by the search angle.

With reference to the foregoing seventh aspect and/or the first possible implementation manner and/or the second possible implementation manner in a third possible implementation manner, when multiple search angles are determined by the angle determining unit, the feedback information received by the signal receiving unit includes beam direction information of the first millimeter wave signal received by the second device; and

the aligning unit is specifically configured to: after the signal receiving unit receives the feedback information, determine to implement millimeter wave phased-array beam alignment with the second device in a beam direction that is of the first millimeter wave signal and in the feedback information.

With reference to the foregoing seventh aspect and/or the first possible implementation manner and/or the second possible implementation manner and/or the third possible implementation manner, in a fourth possible implementation manner, the communications device further includes:

a first range determining unit, configured to: before the angle determining unit communicates with the second device over the low-band communication link to determine the search angle, when a distance between the communications device and the second device is less than or equal to a distance threshold, transmit a wide beam millimeter wave signal to search for the second device, where the wide beam millimeter wave signal is a high frequency millimeter wave signal; receive signal belonging information sent by the second device, where the signal belonging information includes an antenna sector of the communications device to which the wide beam millimeter wave signal that is received by the second device belongs; and determine an angle range, which is indicated by the antenna sector, as a search range; and the angle determining unit is specifically configured to communicate with the second device over the low-band communication link to determine the search angle within the search range.

With reference to the foregoing seventh aspect and/or the first possible implementation manner and/or the second possible implementation manner and/or the third possible implementation manner and/or the fourth possible implementation manner, in a fifth possible implementation manner, the communications device further includes:

a height information receiving unit, configured to: before the angle determining unit communicates with the second device over the low-band communication link to determine the search angle, receive height information of the second device over the low-band communication link; and
a second range determining unit, configured to determine a search range according to height information of the communications device and the height information of the second device; where
the angle determining unit is specifically configured to communicate with the second device over the low-band communication link to determine the search angle within the search range.

According to an eighth aspect, a communications device is provided, including:

a signal transmitting unit, configured to transmit a millimeter wave signal to search for a second device;
a signal receiving unit, configured to receive feedback information that is sent by the second device over a low-band communication link, where the feedback information is used to indicate that the second device receives the millimeter wave signal transmitted by the communications device, and the millimeter wave signal is a high frequency millimeter wave signal; and
an aligning unit, configured to: after the signal receiving unit receives the feedback information, determine to implement millimeter wave phased-array beam alignment with the second device in a transmitting direction of the millimeter wave signal. With reference to the foregoing eighth aspect, in a first possible implementation manner, when the signal transmitting unit transmits millimeter wave signals in multiple transmitting directions to search for the second device, the feedback information received by the signal receiving unit includes beam direction information of the millimeter wave signal received by the second device; and
the aligning unit is specifically configured to: after the signal receiving unit receives the feedback information, determine to implement millimeter wave phased-array beam alignment with the second device in a beam direction that is of the millimeter wave signal and in the feedback information.

With reference to the foregoing eighth aspect and/or the first possible implementation manner, in a second possible implementation manner, the communications device further includes:

a first range determining unit, configured to: before the signal transmitting unit transmits the millimeter wave signal to search for the second device, when a distance between the communications device and the second device is less than or equal to a distance threshold, transmit a wide beam millimeter wave signal to search for the second device, where the wide beam millimeter wave signal is a high frequency millimeter wave signal; receive signal belonging information sent by the second device, where the signal belonging information includes an antenna sector of the communications device to which the wide beam millimeter wave signal that is received by the second device belongs; and determine an angle range, which is indicated by the antenna sector, as a search range; where
the signal transmitting unit is specifically configured to transmit the millimeter wave signal within the search range to search for the second device.

With reference to the foregoing eighth aspect and/or the first possible implementation manner and/or the second possible implementation manner, in a third possible implementation manner, the communications device further includes:

a height information receiving unit, configured to: before the signal transmitting unit transmits the millimeter wave signal to search for the second device, receive height information of the second device over the low-band communication link; and
a second range determining unit, configured to determine a search range according to height information of the communications device and the height information of the second device; where
the signal transmitting unit is specifically configured to transmit the millimeter wave signal within the search range to search for the second device.

According to a ninth aspect, a communications device is provided, including:

a range determining unit, configured to determine a search range within which a second device is searched for;
a signal transmitting unit, configured to transmit a first millimeter wave signal within the search range to search for the second device;
a signal receiving unit, configured to receive a second millimeter wave signal transmitted by the second device, where the second device transmits the second millimeter wave signal after receiving the first millimeter wave signal; and
an aligning unit, configured to: after the second millimeter wave signal is received, determine to implement millimeter wave phased-array beam alignment with the second device in a direction in which the second millimeter wave signal is received; where both the first millimeter wave signal and the second millimeter wave signal are high frequency millimeter wave signals.

With reference to the foregoing ninth aspect, in a first possible implementation manner, the range determining unit is specifically configured to: when a distance between the communications device and the second device is less than or equal to a distance threshold, transmit a wide beam millimeter wave signal to search for the second device, where the wide beam millimeter wave signal is a high frequency millimeter wave signal; receive signal belonging information sent by the second device, where the signal belonging information includes an antenna sector of the communications device to which the wide beam millimeter wave signal that is received by the second device belongs; and determine an angle range, which is indicated by the antenna sector, as the search range.

With reference to the foregoing ninth aspect and/or the first possible implementation manner, in a second possible implementation manner, the range determining unit includes:

a receiving subunit, configured to receive height information of the second device over a low-band communication link; and
a determining subunit, configured to determine the search range according to height information of the communications device and the height information of the second device.

According to a tenth aspect, a communications device is provided, including:

an angle determining unit, configured to communicate with a first device over a low-band communication link to determine a search angle;
a signal receiving unit, configured to receive, in a direction indicated by the search angle, a first millimeter wave signal transmitted by the first device, where the first millimeter wave signal is a high frequency millimeter wave signal; and
a feedback unit, configured to: after the signal receiving unit receives the first millimeter wave signal, send feedback information to the first device, so that after receiving the feedback information, the first device determines to implement millimeter wave phased-array beam alignment with the communications device in the direction indicated by the search angle.

With reference to the foregoing tenth aspect, in a first possible implementation manner, the feedback unit is specifically configured to: after the signal receiving unit receives the first millimeter wave signal, transmit a second millimeter wave signal in the direction indicated by the search angle, so that after receiving the second millimeter wave signal in the direction indicated by the search angle, the first device determines to implement millimeter wave phased-array beam alignment with the communications device in the direction indicated by the search angle, where the second millimeter wave signal is a high frequency millimeter wave signal.

With reference to the foregoing tenth aspect and/or the first possible implementation manner, in a second possible implementation manner, the feedback unit is specifically configured to: after the signal receiving unit receives the first millimeter wave signal, send the feedback information to the first device over the low-band communication link, where the feedback information is used to indicate that the communications device receives the first millimeter wave signal in the direction indicated by the search angle.

With reference to the foregoing tenth aspect and/or the first possible implementation manner and/or the second possible implementation manner, in a third possible implementation manner, when multiple search angles are determined by the angle determining unit, the feedback information includes beam direction information of the first millimeter wave signal received by the signal receiving unit, so that after receiving the feedback information, the first device determines to implement millimeter wave phased-array beam alignment with the communications device in a beam direction that is of the first millimeter wave signal and in the feedback information.

With reference to the foregoing tenth aspect and/or the first possible implementation manner and/or the second possible implementation manner and/or the third possible implementation manner, in a fourth possible implementation manner, the signal receiving unit is further configured to: before the angle determining unit communicates with the first device over the low-band communication link to determine the search angle, when a distance between the communications device and the first device is less than or equal to a distance threshold, receive a wide beam millimeter wave signal transmitted by the first device, where the wide beam millimeter wave signal is a high frequency millimeter wave signal;

the feedback unit is further configured to: after the signal receiving unit receives the wide beam millimeter wave signal, send signal belonging information to the first device, where the signal belonging information includes an antenna sector of the first device to which the wide beam millimeter wave signal that is received by the communications device belongs, so that the first device determines an angle range, which is indicated by the antenna sector, as a search range; and

the angle determining unit is specifically configured to communicate with the first device over the low-band communication link to determine the search angle within the search range.

With reference to the foregoing tenth aspect and/or the first possible implementation manner and/or the second possible implementation manner and/or the third possible implementation manner and/or the fourth possible implementation manner, in a fifth possible implementation manner, the communications device further includes:

a height information sending unit, configured to: before the angle determining unit communicates with the first device over the low-band communication link to determine the search angle, send height information of the communications device to the first device over the low-band communication link, so that the first device determines a search range according to height information of the first device and the height information of the communications device; and the angle determining unit is specifically configured to communicate with the first device over the low-band communication link to determine the search angle within the search range.

According to an eleventh aspect, a communications device is provided, including:

a signal receiving unit, configured to receive a millimeter wave signal transmitted by a first device, where the millimeter wave signal is a high frequency millimeter wave signal; and a feedback unit, configured to: after the signal receiving unit receives the millimeter wave signal, send feedback information to the first device over a low-band communication link, where the feedback information is used to indicate that the communications device receives the millimeter wave signal transmitted by the first device, so that after receiving the feedback information, the first device determines to implement millimeter wave phased-array beam alignment with the communications device in a transmitting direction of the millimeter wave signal.

With reference to the foregoing eleventh aspect, in a first possible implementation manner, the feedback information includes beam direction information of the millimeter wave signal received by the communications device, so that after receiving the feedback information, the first device determines to implement millimeter wave phased-array beam alignment with the communications device in a beam direction that is of the millimeter wave signal and in the feedback information.

With reference to the foregoing eleventh aspect and/or the first possible implementation manner, in a second possible implementation manner, the signal receiving unit is further configured to: before the millimeter wave signal transmitted by the first device is received, when a distance between the communications device and the first device is less than or equal to a distance threshold, receive a wide beam millimeter wave signal transmitted by the first device, where the wide beam millimeter wave signal is a high frequency millimeter wave signal;

the feedback unit is further configured to: after the signal receiving unit receives the wide beam millimeter wave signal, send signal belonging information to the first device, where the signal belonging information includes an antenna sector of the first device to which the wide beam millimeter wave signal that is received by the communications device belongs, so that the first device determines an angle range, which is indicated by the antenna sector, as a search range; and
the signal receiving unit is specifically configured to receive, within the search range, the millimeter wave signal transmitted by the first device.

With reference to the foregoing eleventh aspect and/or the first possible implementation manner and/or the second possible implementation manner, in a third possible implementation manner, the communications device further includes:

a height information sending unit, configured to: before the signal receiving unit receives the millimeter wave signal transmitted by the first device, send height information of the communications device to the first device over the low-band communication link, so that the first device determines a search range according to height information of the first device and the height information of the communications device; where
the signal receiving unit is specifically configured to receive, within the search range, the millimeter wave signal transmitted by the first device.

According to a twelfth aspect, a communications device is provided, including:

a signal receiving unit, configured to receive a first millimeter wave signal transmitted by a first device within a determined search range; and
a signal transmitting unit, configured to: after the signal receiving unit receives the first millimeter wave signal, transmit a second millimeter wave signal, so that after receiving the second millimeter wave signal, the first device determines to implement millimeter wave phased-array beam alignment with the communications device in a direction in which the second millimeter wave signal is received, where both the first millimeter wave signal and the second millimeter wave signal are high frequency millimeter wave signals.

With reference to the foregoing twelfth aspect, in a first possible implementation manner, the signal receiving unit is further configured to: before the first millimeter wave signal transmitted by the first device within the determined search range is received, when a distance between the communications device and the first device is less than or equal to a distance threshold, receive a wide beam millimeter wave signal transmitted by the first device, where the wide beam millimeter wave signal is a high frequency millimeter wave signal; and

the signal transmitting unit is further configured to: after the signal receiving unit receives the wide beam millimeter wave signal, send signal belonging information to the first device, where the signal belonging information includes an antenna sector of the first device to which the wide beam millimeter wave signal that is received by the communications device belongs, so that the first device determines an angle range, which is indicated by the antenna sector, as the search range.

With reference to the foregoing twelfth aspect and/or the first possible implementation manner, in a second possible implementation manner, the communications device further includes:

a height information sending unit, configured to: before the signal receiving unit receives the first millimeter wave signal transmitted by the first device within the determined search range, send height information of the communications device to the first device over the low-band communication link, so that the first device determines the search range according to height information of the first device and the height information of the communications device.

According to a thirteenth aspect, a millimeter wave phased-array beam alignment system is provided, including the communications device according to the foregoing seventh aspect and the communications device according to the foregoing tenth aspect.
According to a fourteenth aspect, a millimeter wave phased-array beam alignment system is provided, including the communications device according to the foregoing eighth aspect and the communications device according to the foregoing eleventh aspect.
According to a fifteenth aspect, a millimeter wave phased-array beam alignment system is provided, including the communications device according to the foregoing ninth aspect and the communications device according to the foregoing twelfth aspect.
In the embodiments of the present invention, a low frequency band such as 2.4 GHz or 5 GHz in a device is used as an auxiliary communication link to determine a search angle, so that a first device and a second device perform, according to the search angle, a beam searching process by means of receiving and transmission collaboration, thereby implementing millimeter wave phased-array beam alignment. According to the method, blindness of beam searching is reduced, and times of beam scanning are significantly reduced, thereby improving phased-array beam alignment efficiency, shortening time required for establishing a communication link in a millimeter wave frequency band such as 60 GHz, saving power consumption of a device, and enhancing user experience.

**BRIEF DESCRIPTION OF DRAWINGS**

To describe the technical solutions in the embodiments of the present invention more clearly, the following briefly introduces the accompanying drawings required for describing the embodiments. Apparently, a person of ordinary skill in the art may still derive other drawings from these accompanying drawings without creative efforts.

FIG. 1 is a flowchart of a millimeter wave phased-array beam alignment method according to an embodiment of the present invention;
FIG. 2a is a schematic diagram of determining a search angle according to an embodiment of the present invention;
FIG. 2b is a schematic diagram of searching according to a receiving and transmission collaboration method according to an embodiment of the present invention;
FIG. 2c is a schematic diagram of determining a search range by means of coarse positioning according to an embodiment of the present invention;
FIG. 2d is a schematic diagram of searching by using a combination method of coarse positioning, receiving and transmission collaboration, and answer according to an embodiment of the present invention;
FIG. 3 is a flowchart of a method for determining a search range according to an embodiment of the present invention;
FIG. 4 is a flowchart of another millimeter wave phased-array beam alignment method according to an embodiment of the present invention;
FIG. 5a is a flowchart of another millimeter wave phased-array beam alignment method according to an embodiment of the present invention;
FIG. 5b is a schematic diagram of searching by means of coarse positioning according to an embodiment of the present invention;
FIG. 6 is a flowchart of another millimeter wave phased-array beam alignment method according to an embodiment of the present invention;
FIG. 7 is a flowchart of another millimeter wave phased-array beam alignment method according to an embodiment of the present invention;
FIG. 8 is a flowchart of another millimeter wave phased-array beam alignment method according to an embodiment of the present invention;

FIG. 9 is a schematic structural diagram of a communications device according to an embodiment of the present invention;
FIG. 10 is a schematic structural diagram of another communications device according to an embodiment of the present invention;
FIG. 11 is a schematic structural diagram of another communications device according to an embodiment of the present invention;
FIG. 12 is a schematic structural diagram of another communications device according to an embodiment of the present invention;
FIG. 13 is a schematic structural diagram of another communications device according to an embodiment of the present invention; and
FIG. 14 is a schematic structural diagram of another communications device according to an embodiment of the present invention.

**DESCRIPTION OF EMBODIMENTS**

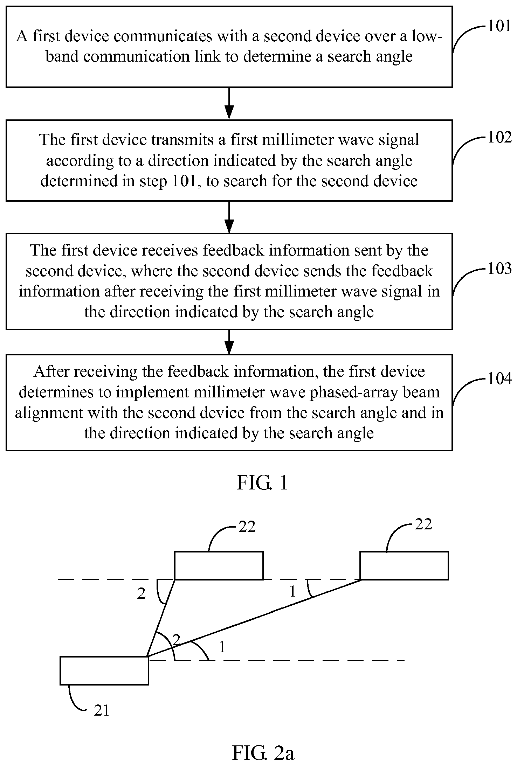

To make a person skilled in the art understand the technical solutions in the embodiments of the present invention better, and make the objectives, features, and advantages of the embodiments of the present invention clearer, the following further describes the technical solutions in the embodiments of the present invention in detail with reference to the accompanying drawings.
Referring to FIG. 1, FIG. 1 is a flowchart of a millimeter wave phased-array beam alignment method according to an embodiment of the present invention.
Step 101: A first device communicates with a second device over a low-band communication link to determine a search angle.
The first device may be a phased-array antenna device, and the second device is another phased-array antenna device that needs to be aligned with the first device. First, the two devices communicate with each other over a low-band communication link, such as a 2.4 GHz/5 GHz frequency band communication link, to determine a search angle from which searching and alignment are performed, where the search angle may be an included angle formed by means of clockwise or anticlockwise rotation relative to a horizontal direction or a vertical direction.
For example, as shown in FIG. 2a, the first device is a notebook computer 21, and the second device is a projector 22; the two devices communicate with each other over a low-band communication link to determine a search angle such as $\angle 1$ shown in FIG. 2a. Step 102: The first device transmits a first millimeter wave signal in a direction indicated by the search angle determined in step 101, to search for the second device.
The first device transmits the first millimeter wave signal according to the search angle determined in the previous step, such as $\angle 1$ in FIG. 2a. The direction indicated by the search angle is also a direction in which a side of the search angle is located. If the search angle is relative to the horizontal direction, the direction indicated by the search angle may be a direction in which a side is located, where the side and the horizontal direction form an included angle.

In this embodiment of the present invention, a millimeter wave may be a narrow beam, and a frequency of the millimeter wave may be but is not limited to 60 GHz. In this embodiment of the present invention, all millimeter wave signals (including a first millimeter wave signal, a second millimeter wave signal, and a wide beam millimeter wave signal) are high frequency millimeter wave signals, where the first millimeter wave signal and the second millimeter wave signal may be signals of a same frequency, and the wide beam millimeter wave signal may be a signal that has the same frequency as the first millimeter wave signal. The "first" and the "second" are used to distinguish millimeter wave signals transmitted by different devices, but are not specific references.

According to symmetry of an included angle between a line connecting two devices and the horizontal direction, when the first device transmits a signal according to ∠1, the second device starts to receive the first millimeter wave signal also according to the search angle. Regardless of whether the second device is located in a direction of ∠1, the second device needs to receive the signal in the direction of ∠1. If the second device is exactly located in a transmitting direction of the first millimeter wave signal, the second device can receive the first millimeter wave signal. In this case, the second device sends feedback information to the first device. If the second device is not located in the transmitting direction of the first millimeter wave signal, the second device cannot receive the first millimeter wave signal from the determined search angle, and the second device does not send feedback information to the first device.

As shown in FIG. 2a, if an included angle between a line connecting the projector 22 and the notebook computer 21 and the horizontal direction is exactly ∠1, the projector 22 can receive, in a direction of ∠1, a first millimeter wave signal transmitted by the notebook computer 21. In this case, the projector 22 sends feedback information to the notebook computer 21. If the included angle between the line connecting the projector 22 and the notebook computer 21 and the horizontal direction is ∠2, the projector 22 cannot receive, in the direction of ∠1, the first millimeter wave signal transmitted by the notebook computer 21. In this case, the projector 22 does not send feedback information to the notebook computer 21.

Phased-array antenna planes of two devices are parallel, so as to determine a search angle, and if the planes are not parallel, compensation may be made for an included angle between the antenna planes by using internal vertical angle sensors of the devices.

In a process in which the first device searches for the second device, after sending the first millimeter wave signal, if the first device does not receive the feedback information from the second device, it indicates that the second device is not found by searching. A manner is as follows: Step 101 may be performed again to determine another search angle, and then step 102 is performed again until the feedback information from the second device is received, and the second device is found by searching. Another manner is as follows: In the previous step 101, the first device and the second device may determine multiple search angles, and then in step 102, the first device transmits millimeter wave signals one by one according to a specific angle order until the feedback information from the second device is received, and the second device is found by searching.

Step 103: The first device receives feedback information sent by the second device, where the second device sends the feedback information after receiving the first millimeter wave signal in the direction indicated by the search angle.

After receiving, in the direction indicated by the determined search angle, the first millimeter wave signal sent by the first device, the second device sends the feedback information to the first device.

In an embodiment of the present invention, that the first device receives feedback information sent by the second device may be specifically as follows:

The first device receives, according to the search angle, a second millimeter wave signal transmitted by the second device from the search angle, where after receiving the first millimeter wave signal from the search angle, the second device transmits the second millimeter wave signal.

This manner is also that after the second device receives the first millimeter wave signal, the first device and the second device exchange roles with each other, and the second device transmits the second millimeter wave signal to the first device and a searching process repeats to determine a location of the first device. This process is similar to a searching manner in a blind searching process in the prior art.

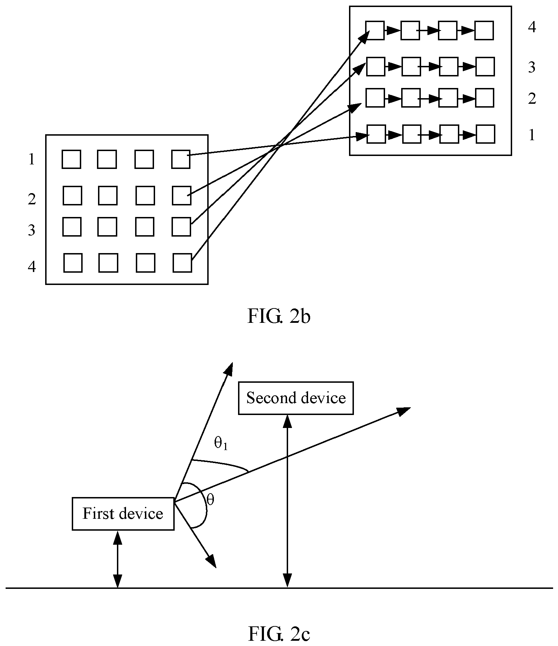

In a specific instance, as shown in FIG. 2b, for ease of calculation, it is assumed that a beam coverage consists of M × M sub-areas, and a total quantity of sub-areas is $M^2$. Both receiving and transmitting parties synchronously scan and search horizontal sub-areas according to an order of 1, 2, 3 and 4, and may divide, according to a horizontal (or vertical) direction, a scanning area into M (for example, M=4 in the figure) angles, to perform receiving and transmission collaboration according to the foregoing method. A horizontal angle is used as an example. There are M scanning areas at each layer of layers 1 to 4. If one time of scanning and searching is performed at each layer, a maximum of $M^2$ times are possibly required, and a maximum of $M^3$ times of searching are required for M layers. There is M times of reduction in the times of searching compared with times of blind searching in a single direction.

Preferably, in another embodiment of the present invention, that the first device receives feedback information sent by the second device may be specifically as follows:

The first device receives the feedback information sent by the second device over a low-band communication link, such as a 2.4 GHz/5 GHz frequency band communication link, where the feedback information is used to indicate that the second device receives the first millimeter wave signal from the determined search angle.

In this manner, after receiving the first millimeter wave signal sent by the first device, the second device immediately sends an answer signal to the first device by using a 2.4 GHz or 5 GHz low frequency band, to instruct the first device to terminate a searching process, so as to avoid a subsequent invalid beam searching process. When multiple search angles are determined, the feedback information, that is, the answer signal may include a beam direction number of the first millimeter wave signal that is sent by the first device and received by the second device, such as a number of ∠1. In this way, the first device learns which beam direction of a transmitting antenna the second device is located in.

In the previous manner, if the second device does not give answer feedback to return this information to the first device, the second device and the first device need to exchange receiving and transmitting roles with each other, and beam scanning needs to be performed once again before beam pointing information can be exchanged, so as to complete a beam scanning and searching process. Therefore, according to the manner, in an answer method of the second device, a maximum of half times of scanning and searching may be reduced, thereby further improving phased-array beam alignment efficiency.

Step 104: After receiving the feedback information, the first device determines to implement millimeter wave phased-array beam alignment with the second device in the direction indicated by the search angle.

In this step, if the first device receives, in the direction indicated by the search angle, the second millimeter wave signal transmitted by the second device, the first device can determine that the first device can implement millimeter wave phased-array beam alignment with the second device in the direction indicated by the search angle, that is, the first device is aligned with the second device in a receiving direction in which the second millimeter wave signal is received.

If the first device receives the feedback information, that is, the answer signal, sent by the second device over the low-band communication link, and the answer signal includes information that is used to indicate that the second device receives the first millimeter wave signal from the search angle, the first device can also learn that the first device can implement millimeter wave phased-array beam alignment with the second device in the direction indicated by the search angle. If the feedback information received by the first device includes beam direction information of the first millimeter wave signal received by the second device, the first device determines, after receiving the feedback information, to implement millimeter wave phased-array beam alignment with the second device in the beam direction that is of the first millimeter wave signal and in the feedback information.

In this embodiment of the present invention, a low frequency band such as 2.4 GHz or 5 GHz in a device is used as an auxiliary communication link to determine a search angle, so that a first device and a second device perform, according to the search angle, a beam searching process by means of receiving and transmission collaboration, thereby implementing millimeter wave phased-array beam alignment. According to the method, blindness of beam searching is reduced, and times of beam scanning are significantly reduced, thereby improving phased-array beam alignment efficiency, shortening time required for establishing a communication link in a millimeter wave frequency band such as 60 GHz, saving power consumption of a device, and enhancing user experience.

In another embodiment of the present invention, before that a first device communicates with a second device over a low-band communication link to determine a search angle, the first device may further perform coarse positioning in advance on a location of the second device to determine a search range, where the search range refers to an angle range to which the search angle belongs. There may be multiple manners for the process of determining the search range. For example,

in manner 1, when a distance between the first device and the second device is less than or equal to a distance threshold, the first device transmits a wide beam millimeter wave signal to search for the second device; in this embodiment of the present invention, a frequency of a wide beam millimeter wave may be but is not limited to 60 GHz;
the first device receives signal belonging information sent by the second device, where the signal belonging information includes an antenna sector of the first device to which the wide beam millimeter wave signal that is received by the second device belongs; and
the first device determines an angle range, which is indicated by the antenna sector, as a search range.

The first device divides an antenna coverage of the first device into several coverage areas (sectors), and the first device separately sends a wide beam millimeter wave signal to these areas (sectors). This signal includes numbers such as 1, 2, and 3 of these areas (sectors). In this way, after receiving this signal, the second device naturally learns that a signal received by the second device is sent, in which sector, by the first device, and then feeds back a number of this sector to the first device over the low-band communication link. In this way, the first device learns which sector coverage the second device falls within.

If the distance between the first device and the second device is less than or equal to the distance threshold, that is, the distance between the first device and the second device falls within a range of a valid communication distance between wide beams, two devices can find a rough location of each other by means of scanning and searching by using wider beams, so as to determine the search range. The process is similar to that in the prior art, and details are not described herein again.

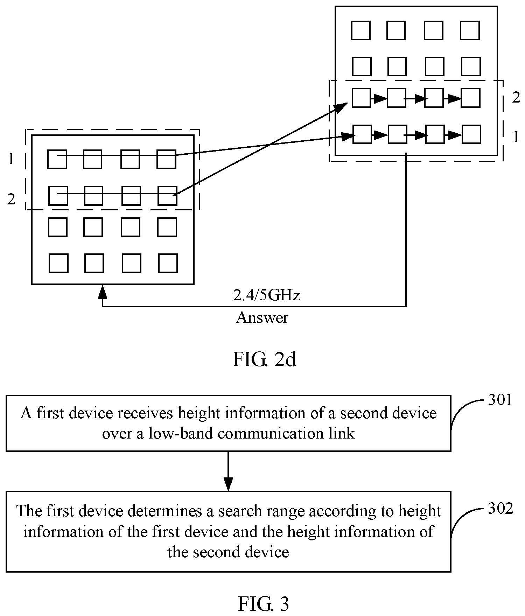

In manner 2, as shown in FIG. 3, the method for determining the search range may include:

Step 301: The first device receives height information of the second device over the low-band communication link.

A device height and/or a vertical angle between a device and the ground may be sensed by a height sensor and/or a vertical angle sensor, or the like disposed in both the first device and the second device, and may further be sensed by a built-in height information register, a device type register, or the like.

The height information storage register is configured to: when a device generally works, store a height that is relative to the indoor ground and at which the device is located. The height may be a fixed value, and may be a height range. The height may be a factory default value, and may also be changed and set by a user.

The device type register is configured to use a number to indicate a device type, such as a notebook computer, a television set, a mobile phone, or a projector.

The second device may obtain the height information of the second device in a manner, for example, by reading information from the height information storage register, and then send the height information to the first device by using a low frequency band, such as 2.4 GHz or 5 GHz.

Step 302: The first device determines a search range according to height information of the first device and the height information of the second device.

The first device obtains the height information of the first device in a manner, for example, by reading information from the height information storage register, and then the first device can determine, according to the height information of the first device and the received height information of the second device, a rough angle, which is relative to a horizontal direction or a vertical direction, of a line connecting the two devices, and thereby can determine the search range.

In addition, the first device and the second device may exchange information such as a device type and an antenna type with each other; therefore, a master and slave searching devices can be determined. For example, in the foregoing embodiments, the first device is a master searching device, and the second device is a slave searching device. Certainly, the two devices may also be equivalent, and it is unnecessary to distinguish the master and slave searching devices.

After the search range is determined in the foregoing manners, the first device communicates with the second device over the low-band communication link to determine the search angle within the search range.

In this embodiment of the present invention, a search range is determined by means of coarse positioning, so that a beam scanning and searching range is further narrowed down, and times of beam scanning and searching are reduced, thereby establishing a communication link more quickly, reducing power consumption of a device, and enhancing user experience.

In a specific instance, as shown in FIG. 2c, a full search angle of the first device is $\theta$, and it is learned, by means of coarse positioning, that the second device is located within an angle range $\theta_1$. Therefore, the first device needs to perform narrow beam scanning only within the small range $\theta_1$, thereby narrowing down a search range and reducing times of scanning.

In this embodiment of the present invention, the foregoing manners of determining a search angle, that is, a manner in which a first device and a second device perform receiving and transmission collaboration, a manner in which the second device makes an answer over a low-band communication link, a manner of determining a search range by means of coarse positioning, and a blind searching manner in the prior art may be randomly combined according to a requirement, such as receiving and transmission collaboration, a combination of receiving and transmission collaboration and answer, a combination of coarse positioning and receiving and transmission collaboration, and a combination of coarse positioning, receiving and transmission collaboration, and answer. No detailed description is given herein again. For details, refer to descriptions of the foregoing embodiments.

In a preferred embodiment, as shown in FIG. 2d, if both communications devices have corresponding hardware conditions, and use a combination of coarse positioning, receiving and transmission collaboration, and answer, a best or preferred implementation instance of the present invention may be achieved, and maximum possible times of scanning and searching are $M^3 \frac{\theta_1}{\theta}$.

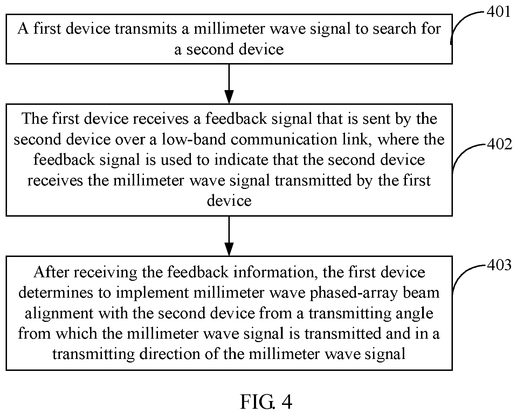

Referring to FIG. 4, FIG. 4 is a flowchart of another millimeter wave phased-array beam alignment method according to an embodiment of the present invention.

A difference between this embodiment of the present invention and the foregoing embodiments lies in that the foregoing embodiments are described in terms of receiving and transmission collaboration, and a combination of receiving and transmission collaboration, coarse positioning, and/or answer, and this embodiment of the present invention is mainly described in terms of a combination of answer and another manner.

The method may include:

Step 401: A first device transmits a millimeter wave signal to search for a second device.

The first device is a phased-array antenna device, and the second device is another phased-array antenna device that needs to be aligned with the first device. In this step, the first device may transmit millimeter wave signals in multiple directions in a blind searching manner to search for the second device, and a frequency of the millimeter wave signal may be 60 GHz.

Step 402: The first device receives feedback information that is sent by the second device over a low-band communication link, where the feedback information is used to indicate that the second device receives the millimeter wave signal transmitted by the first device.

After receiving a millimeter wave signal transmitted by the first device in a direction, the second device sends feedback information to the first device by using a low frequency band such as 2.4 GHz or 5 GHz, so as to make an answer, where the feedback information is used to indicate that the second device receives the millimeter wave signal transmitted by the first device.

Specifically, after receiving a first millimeter wave signal sent by the first device, the second device immediately sends an answer signal to the first device by using a low frequency band, that is, 2.4 GHz or 5 GHz, to instruct the first device to terminate a searching process, so as to avoid a subsequent invalid beam searching process. The answer signal may include a beam direction number that is sent by the first device and received by the second device, such as a number of ∠1 shown in FIG. 2a. Therefore, the first device learns which beam direction of a transmitting antenna the second device is located in.

Step 403: After receiving the feedback information, the first device determines to implement millimeter wave phased-array beam alignment with the second device in a transmitting direction of the millimeter wave signal.

After receiving the foregoing feedback information, that is, the answer signal, the first device can learn which angle the first device can implement millimeter wave phased-array beam alignment with the second device from.

When the first device transmits millimeter wave signals in multiple transmitting directions to search for the second device, the feedback information includes beam direction information of the millimeter wave signal received by the second device. After receiving the feedback information, the first device determines to implement millimeter wave phased-array beam alignment with the second device in a beam direction that is of the millimeter wave signal and in the feedback information.

In this embodiment of the present invention, a second device gives answer feedback to a first device to return related information in a received millimeter wave signal to the first device, thereby omitting a process in which the second device and the first device exchange receiving and transmitting roles with each other, and beam scanning needs to be performed once again before beam pointing information can be exchanged, so as to complete beam scanning and searching. Therefore, according to this manner, in an answer method of the second device, a maximum of half times of scanning and searching may be reduced, thereby further improving phased-array beam alignment efficiency, shortening time required for establishing a communication link in a millimeter wave frequency band such as 60 GHz, saving power consumption of a device, and enhancing user experience.

In another embodiment of the present invention, before the first device transmits a millimeter wave signal to perform blind searching on the second device, the first device may further perform coarse positioning in advance on a location of the second device to determine a search range. There may be multiple manners for the process of determining the search range. For example,

in manner 1, when a distance between the first device and the second device is less than or equal to a distance threshold, the first device transmits a wide beam millimeter wave signal to search for the second device;

the first device receives signal belonging information sent by the second device, where the signal belonging information includes an antenna sector of the first device to which the wide beam millimeter wave signal that is received by the second device belongs; and

the first device determines an angle range, which is indicated by the antenna sector, as the search range.

In manner 2, the method for determining the search range may include the following:

The first device receives height information of the second device over the low-band communication link; and

the first device determines the search range according to height information of the first device and the height information of the second device.

Specific processes of the foregoing two manners are the same as those of manner 1 and manner 2 in the foregoing embodiments, and details are not described herein again.

After the search range is determined in the foregoing manners, the first device transmits the millimeter wave signal within the determined search range to search for the second device.

In this embodiment of the present invention, a search range is determined by means of coarse positioning, so that a beam scanning and searching range is further narrowed down, and times of beam scanning and searching are reduced, thereby establishing a communication link more quickly, reducing power consumption of a device, and enhancing user experience.

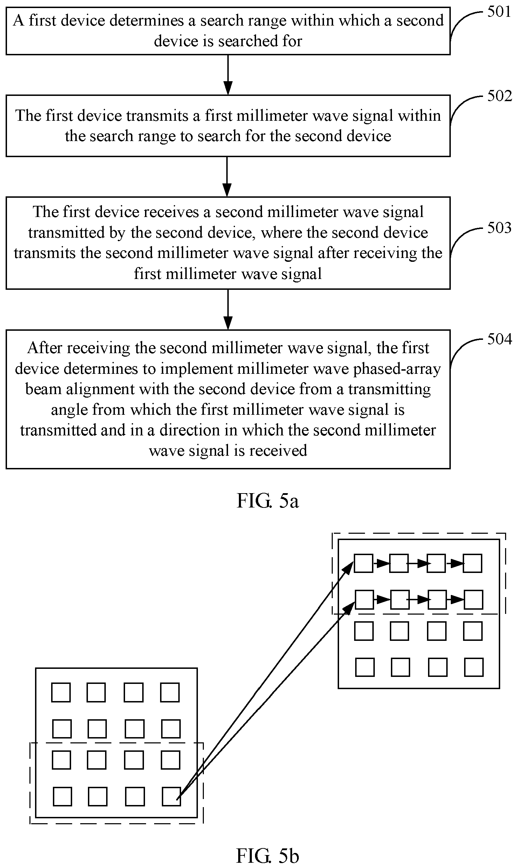

Referring to FIG. 5a, FIG. 5a is a flowchart of another millimeter wave phased-array beam alignment method according to an embodiment of the present invention.

A difference between this embodiment of the present invention and the foregoing embodiments lies in that the foregoing embodiments are described in terms of receiving and transmission collaboration, a combination of receiving and transmission collaboration, coarse positioning, and/or answer, and a combination of answer and another manner, and this embodiment of the present invention is mainly described in terms of a method for a combination of coarse positioning and blind searching.

The method may include:

Step 501: A first device determines a search range within which a second device is searched for.

There may be multiple manners for the process of determining the search range. For example,

in manner 1, when a distance between the first device and the second device is less than or equal to a distance threshold, the first device transmits a wide beam millimeter wave signal to search for the second device;
the first device receives signal belonging information sent by the second device, where the signal belonging information includes an antenna sector of the first device to which the wide beam millimeter wave signal that is received by the second device belongs; and
the first device determines an angle range, which is indicated by the antenna sector, as the search range.

In manner 2, the method for determining the search range may include the following:

The first device receives height information of the second device over a low-band communication link; and

the first device determines the search range according to height information of the first device and the height information of the second device.

Specific processes of the foregoing two manners are the same as those of manner 1 and manner 2 in the foregoing embodiments, and details are not described herein again.

Step 502: The first device transmits a first millimeter wave signal within the search range to search for the second device.

Step 503: The first device receives a second millimeter wave signal transmitted by the second device, where the second device transmits the second millimeter wave signal after receiving the first millimeter wave signal.

Step 504: After receiving the second millimeter wave signal, the first device determines to implement millimeter wave phased-array beam alignment with the second device in a direction in which the second millimeter wave signal is received.

In the foregoing steps 502 to 504, the first device is a signal transmitter, and the second device is a signal receiver. The first device searches for the second device, and after the second device receives a signal, the first device and the second device exchange roles with each other. A process in which the second device transmits a signal to search for the first device is the same as a searching process in the prior art, and details are not described herein again. A difference between the method and that in the prior art lies only in that in this embodiment, a search range is first determined by means of coarse positioning, and then the first device transmits a signal within the search range to perform searching.

In this embodiment of the present invention, a search range is determined by means of coarse positioning, so that a beam scanning and searching range is narrowed down, and times of beam scanning and searching are reduced, thereby establishing a communication link more quickly, reducing power consumption of a device, and enhancing user experience.

In a specific instance, as shown in FIG. 5b, for ease of calculation, it is assumed that a beam coverage consists of $M \times M$ sub-areas, and a total quantity of sub-areas is $M^2$. If blind searching is used, maximum possible times required for receiving a signal by a receiver are $M^4$. If a transmitter transmits a beam searching sequence to each sub-area once, $M^2$ times are required, and a receiver needs to receive beam searching sequences in each direction for $M^2$ times. In a worst situation, required total times of searching are $M^4$. However, after a search range is determined by means of the foregoing coarse positioning, maximum possible times of searching in a single direction may be reduced to $M^4 \left( \dfrac{\theta_1}{\theta} \right)^2$.

The foregoing embodiments are all described by using the first device as an execution body, and the following is described by using a second device as an execution body.

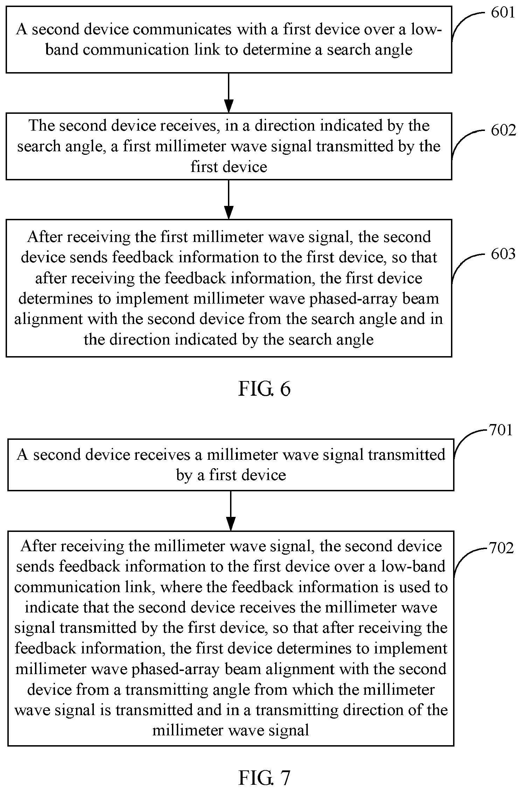

Referring to FIG. 6, FIG. 6 is a flowchart of another millimeter wave phased-array beam alignment method according to an embodiment of the present invention.

The method may include:

Step 601: A second device communicates with a first device over a low-band communication link to determine a search angle.

Step 602: The second device receives, in a direction indicated by the search angle, a first millimeter wave signal transmitted by the first device.

Step 603: After receiving the first millimeter wave signal, the second device sends feedback information to the first device, so that after receiving the feedback information, the first device determines to implement millimeter wave phased-array beam alignment with the second device in the direction indicated by the search angle.

In this embodiment of the present invention, a low frequency band such as 2.4 GHz or 5 GHz in a device is used as an auxiliary communication link to determine a search angle, so that a first device and a second device perform, according to the search angle, a beam searching process by means of receiving and transmission collaboration, thereby implementing millimeter wave phased-array beam alignment. According to the method, blindness of beam searching is reduced, and times of beam scanning are significantly reduced, thereby improving phased-array beam alignment efficiency, shortening time required for establishing a communication link in a millimeter wave frequency band such as 60 GHz, saving power consumption of a device, and enhancing user experience.

In another embodiment of the present invention, that after receiving the first millimeter wave signal, the second device sends feedback information to the first device includes the following:

After receiving the first millimeter wave signal, the second device transmits a second millimeter wave signal in the direction indicated by the search angle, so that after receiving the second millimeter wave signal in the direction indicated by the search angle, the first device determines to implement millimeter wave phased-array beam alignment with the second device in the direction indicated by the search angle.

In another embodiment of the present invention, that after receiving the first millimeter wave signal, the second device sends feedback information to the first device includes the following:

After receiving the first millimeter wave signal, the second device sends the feedback information to the first device over the low-band communication link, where the feedback information is used to indicate that the second device receives the first millimeter wave signal in the direction indicated by the search angle.

When multiple search angles are determined, the feedback information includes beam direction information of the first millimeter wave signal received by the second device, so that after receiving the feedback information, the first device determines to implement millimeter wave phased-array beam alignment with the second device in a beam direction that is of the first millimeter wave signal and in the feedback information.

In another embodiment of the present invention, before that a second device communicates with a first device over a low-band communication link to determine a search angle, the method further includes the following:

When a distance between the second device and the first device is less than or equal to a distance threshold, the second device receives a wide beam millimeter wave signal transmitted by the first device; and

after receiving the wide beam millimeter wave signal, the second device sends signal belonging information to the first device, where the signal belonging information includes an antenna sector of the first device to which the wide beam millimeter wave signal that is received by the second device belongs, so that the first device determines an angle range, which is indicated by the antenna sector, as a search range.

That a second device communicates with a first device over a low-band communication link to determine a search angle is specifically as follows:

The second device communicates with the first device over the low-band communication link to determine the search angle within the search range.

In another embodiment of the present invention, before that a second device communicates with a first device over a low-band communication link to determine a search angle, the method further includes the following:

The second device sends height information of the second device to the first device over the low-band communication link, so that the first device determines a search range according to height information of the first device and the height information of the second device.

That a second device communicates with a first device over a low-band communication link to determine a search angle is specifically as follows:

The second device communicates with the first device over the low-band communication link to determine the search angle within the search range.

Referring to FIG. 7, FIG. 7 is a flowchart of another millimeter wave phased-array beam alignment method according to an embodiment of the present invention.

The method may include:

Step 701: A second device receives a millimeter wave signal transmitted by a first device.
Step 702: After receiving the millimeter wave signal, the second device sends feedback information to the first device over a low-band communication link, where the feedback information is used to indicate that the second device receives the millimeter wave signal transmitted by the first device, so that after receiving the feedback information, the first device determines to implement millimeter wave phased-array beam alignment with the second device in a transmitting direction of the millimeter wave signal.

The feedback information may include beam direction information of the millimeter wave signal received by the second device, so that after receiving the feedback information, the first device determines to implement millimeter wave phased-array beam alignment with the second device in a beam direction that is of the millimeter wave signal and in the feedback information.

In this embodiment of the present invention, a second device gives answer feedback to a first device to return related information in a received millimeter wave signal to the first device, thereby omitting a process in which the second device and the first device exchange receiving and transmitting roles with each other, and beam scanning needs to be performed once again before beam pointing information can be exchanged, so as to complete beam scanning and searching. Therefore, according to this manner, in an answer method of the second device, a maximum of half times of scanning and searching may be reduced, thereby further improving phased-array beam alignment efficiency, shortening time required for establishing a communication link in a millimeter wave frequency band such as 60 GHz, saving power consumption of a device, and enhancing user experience. In another embodiment of the present invention, before that a second device receives a millimeter wave signal transmitted by a first device, the method further includes the following:

When a distance between the second device and the first device is less than or equal to a distance threshold, the second device receives a wide beam millimeter wave signal transmitted by the first device; and

after receiving the wide beam millimeter wave signal, the second device sends signal belonging information to the first device, where the signal belonging information includes an antenna sector of the first device to which the wide beam millimeter wave signal that is received by the second device belongs, so that the first device determines an angle range, which is indicated by the antenna sector, as a search range.

That a second device receives a millimeter wave signal transmitted by a first device is specifically as follows:

The second device receives, within the search range, the millimeter wave signal transmitted by the first device.

In another embodiment of the present invention, before that a second device receives a millimeter wave signal transmitted by a first device, the method further includes the following:

The second device sends height information of the second device to the first device over the low-band communication link, so that the first device determines a search range according to height information of the first device and the height information of the second device.

That a second device receives a millimeter wave signal transmitted by a first device is specifically as follows:

The second device receives, within the search range, the millimeter wave signal transmitted by the first device.

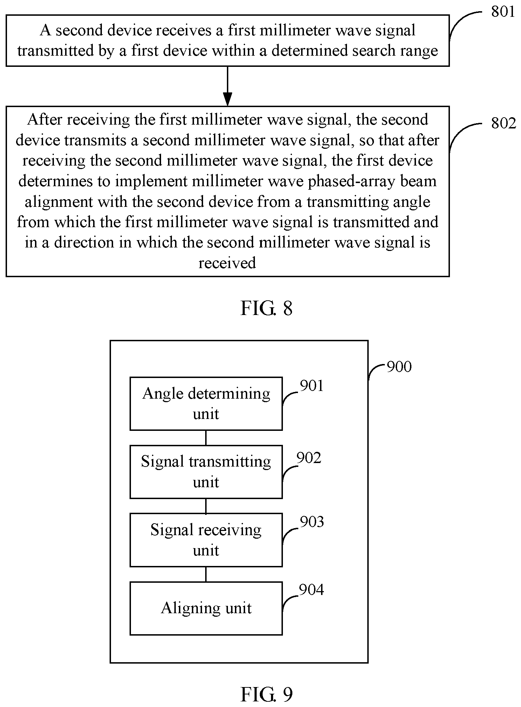

Referring to FIG. 8, FIG. 8 is a flowchart of another millimeter wave phased-array beam alignment method according to an embodiment of the present invention.
The method may include:

Step 801: A second device receives a first millimeter wave signal transmitted by a first device within a determined search range.
Step 802: After receiving the first millimeter wave signal, the second device transmits a second millimeter wave signal, so that after receiving the second millimeter wave signal, the first device determines to implement millimeter wave phased-array beam alignment with the second device in a direction in which the second millimeter wave signal is received.

In this embodiment of the present invention, a search range is determined by means of coarse positioning, so that a beam scanning and searching range is narrowed down, and times of beam scanning and searching are reduced, thereby establishing a communication link more quickly, reducing power consumption of a device, and enhancing user experience.
In another embodiment of the present invention, before that a second device receives a first millimeter wave signal transmitted by a first device within a determined search range, the method further includes the following:

When a distance between the second device and the first device is less than or equal to a distance threshold, the second device receives a wide beam millimeter wave signal transmitted by the first device; and

> after receiving the wide beam millimeter wave signal, the second device sends signal belonging information to the first device, where the signal belonging information includes an antenna sector of the first device to which the wide beam millimeter wave signal that is received by the second device belongs, so that the first device determines an angle range, which is indicated by the antenna sector, as the search range.

In another embodiment of the present invention, before that a second device receives a first millimeter wave signal transmitted by a first device within a determined search range, the method further includes the following:

> The second device sends height information of the second device to the first device over a low-band communication link, so that the first device determines the search range according to height information of the first device and the height information of the second device.

In this embodiment of the present invention, a frequency of a millimeter wave band is not limited to approximately 60 GHz, and the millimeter wave band may be a millimeter wave band that covers an entire frequency band from 20 GHz to 100 GHz. A low frequency band frequency is not limited to a 2.4 GHz/5 GHz frequency band, and may also be any authorized and usable frequency from 30 MHz to 10 GHz. A millimeter wave signal transmitted between a first device and a second device may be specifically a narrow beam millimeter wave signal.

This embodiment of the present invention is not only applied to a millimeter wave standard, such as a 802.11 standard family, a 802.15 standard family (802.15.3c), WiGig, WirelessHD, ISO/IEC 13156, or a combination of these standards.

The foregoing describes method embodiments of the present invention, and the following describes apparatuses for implementing the foregoing methods.

Referring to FIG. 9, FIG. 9 is a schematic structural diagram of a communications device according to an embodiment of the present invention.

The communications device 900 may include:

> an angle determining unit 901, configured to communicate with a second device over a low-band communication link to determine a search angle;
> a signal transmitting unit 902, configured to transmit a first millimeter wave signal in a direction indicated by the search angle, to search for the second device, where the first millimeter wave signal is a high frequency millimeter wave signal;
a signal receiving unit 903, configured to receive feedback information sent by the second device, where the second device sends the feedback information after receiving the first millimeter wave signal in the direction indicated by the search angle; and
an aligning unit 904, configured to: after the signal receiving unit 903 receives the feedback information, determine to implement millimeter wave phased-array beam alignment with the second device in the direction indicated by the search angle.

According to the communications device, a low frequency band such as 2.4 GHz or 5 GHz is used as an auxiliary communication link to determine a search angle, so that the communications device and a second device perform, according to the search angle, a beam searching process by means of receiving and transmission collaboration, thereby implementing millimeter wave phased-array beam alignment. According to the device, blindness of beam searching is reduced, and times of beam scanning are significantly reduced, thereby improving phased-array beam alignment efficiency, shortening time required for establishing a communication link in a millimeter wave frequency band such as 60 GHz, saving power consumption of a device, and enhancing user experience.

In another embodiment, the signal receiving unit is specifically configured to receive, in the direction indicated by the search angle, a second millimeter wave signal transmitted by the second device in the direction indicated by the search angle, where the second device transmits the second millimeter wave signal after receiving the first millimeter wave signal in the direction indicated by the search angle, and the second millimeter wave signal is a high frequency millimeter wave signal.

The aligning unit is specifically configured to: after the signal receiving unit receives the second millimeter wave signal, determine to implement millimeter wave phased-array beam alignment with the second device in the direction indicated by the search angle.

In another embodiment, the signal receiving unit is specifically configured to receive the feedback information sent by the second device over the low-band communication link, where the feedback information is used to indicate that the second device receives the first millimeter wave signal from the search angle.

When multiple search angles are determined by the angle determining unit, the feedback information received by the signal receiving unit includes beam direction information of the first millimeter wave signal received by the second device.

The aligning unit is specifically configured to: after the signal receiving unit receives the feedback information, determine to implement millimeter wave phased-array beam alignment with the second device in a beam direction that is of the first millimeter wave signal and in the feedback information.

In another embodiment, the communications device may further include:

a first range determining unit, configured to: before the angle determining unit communicates with the second device over the low-band communication link to determine the search angle, when a distance between the communications device and the second device is less than or equal to a distance threshold, transmit a wide beam millimeter wave signal to search for the second device, where the wide beam millimeter wave signal is a high frequency millimeter wave signal; receive signal belonging information sent by the second device, where the signal belonging information includes an antenna sector of the communications device to which the wide beam millimeter wave signal that is received by the second device belongs; and determine an angle range, which is indicated by the antenna sector, as a search range.

The angle determining unit is specifically configured to communicate with the second device over the low-band communication link to determine the search angle within the search range.

In another embodiment, the communications device may further include:

a height information receiving unit, configured to: before the angle determining unit communicates with the second device over the low-band communication link to determine the search angle, receive height information of the second device over the low-band communication link; and

a second range determining unit, configured to determine a search range according to height information of the communications device and the height information of the second device.

The angle determining unit is specifically configured to communicate with the second device over the low-band communication link to determine the search angle within the search range.

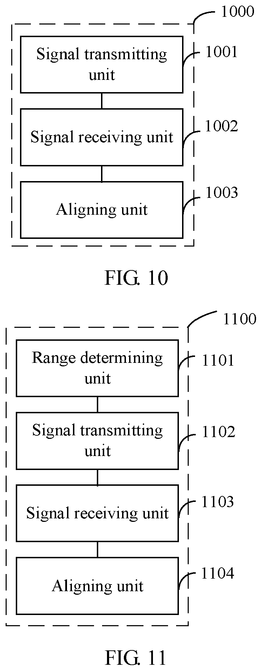

Referring to FIG. 10, FIG. 10 is a schematic structural diagram of another communications device according to an embodiment of the present invention.

The communications device 1000 may include:

a signal transmitting unit 1001, configured to transmit a millimeter wave signal to search for a second device;

a signal receiving unit 1002, configured to receive feedback information that is sent by the second device over a low-band communication link, where the feedback information is used to indicate that the second device receives the millimeter wave signal transmitted by the communications device, and the millimeter wave signal is a high frequency millimeter wave signal; and

an aligning unit 1003, configured to: after the signal receiving unit receives the feedback information, determine to implement millimeter wave phased-array beam alignment with the second device in a transmitting direction of the millimeter wave signal.

When the signal transmitting unit transmits millimeter wave signals in multiple transmitting directions to search for the second device, the feedback information received by the signal receiving unit includes beam direction information of the millimeter wave signal received by the second device.

The aligning unit is specifically configured to: after the signal receiving unit receives the feedback information, determine to implement millimeter wave phased-array beam alignment with the second device in a beam direction that is of the millimeter wave signal and in the feedback information.

In this embodiment of the present invention, a device receives answer feedback sent by a second device to the communications device, thereby omitting a process in which the second device and the communications device exchange receiving and transmitting roles with each other, and beam scanning needs to be performed once again before beam pointing information can be exchanged, so as to complete beam scanning and searching. Therefore, according to the device, a maximum of half times of scanning and searching may be reduced, thereby further improving phased-array beam alignment efficiency, shortening time required for establishing a communication link in a millimeter wave frequency band such as 60 GHz, saving power consumption of a device, and enhancing user experience.

In another embodiment, the communications device may further include:

a first range determining unit, configured to: before the signal transmitting unit transmits the millimeter wave signal to search for the second device, when a distance between the communications device and the second device is less than or equal to a distance threshold, transmit a wide beam millimeter wave signal to search for the second device, where the wide beam millimeter wave signal is a high frequency millimeter wave signal; receive signal belonging information sent by the second device, where the signal belonging information includes an antenna sector of the communications device to which the wide beam millimeter wave signal that is received by the second device belongs; and determine an angle range, which is indicated by the antenna sector, as a search range.

The signal transmitting unit is specifically configured to transmit the millimeter wave signal within the search range to search for the second device.

In another embodiment, the communications device may further include:

a height information receiving unit, configured to: before the signal transmitting unit transmits the millimeter wave signal to search for the second device, receive height information of the second device over the low-band communication link; and

a second range determining unit, configured to determine a search range according to height information of the communications device and the height information of the second device.

The signal transmitting unit is specifically configured to transmit the millimeter wave signal within the search range to search for the second device.

Referring to FIG. 11, FIG. 11 is a schematic structural diagram of another communications device according to an embodiment of the present invention.

The communications device 1100 may include:

a range determining unit 1101, configured to determine a search range within which a second device is searched for;

a signal transmitting unit 1102, configured to transmit a first millimeter wave signal within the search range to search for the second device;

a signal receiving unit 1103, configured to receive a second millimeter wave signal transmitted by the second device, where the second device transmits the second millimeter wave signal after receiving the first millimeter wave signal; and

an aligning unit 1104, configured to: after the second millimeter wave signal is received, determine to implement millimeter wave phased-array beam alignment with the second device in a direction in which the second millimeter wave signal is received.

Both the first millimeter wave signal and the second millimeter wave signal are high frequency millimeter wave signals.

In this embodiment of the present invention, a device determines a search range by means of coarse positioning, so that a beam scanning and searching range is narrowed down, and times of beam scanning and searching are reduced, thereby establishing a communication link more quickly, reducing power consumption of a device, and enhancing user experience.

In another embodiment, the range determining unit is specifically configured to: when a distance between the communications device and the second device is less than or equal to a distance threshold, transmit a wide beam millimeter wave signal to search for the second device, where the wide beam millimeter wave signal is a high frequency millimeter wave signal; receive signal belonging information sent by the second device, where the signal belonging information includes an antenna sector of the communications device to which the wide beam millimeter wave signal that is received by the second device belongs; and determine an angle range, which is indicated by the antenna sector, as the search range.

In another embodiment, the range determining unit includes:

a receiving subunit, configured to receive height information of the second device over a low-band communication link; and

a determining subunit, configured to determine the search range according to height information of the communications device and the height information of the second device.

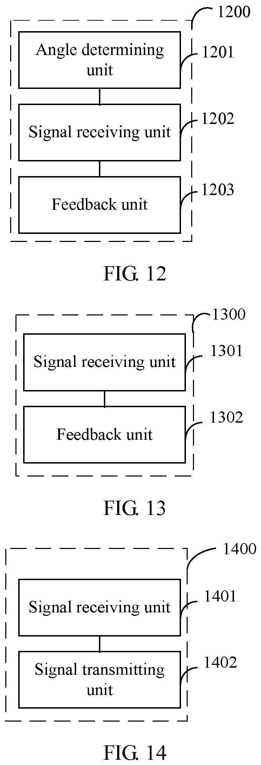

Referring to FIG. 12, FIG. 12 is a schematic structural diagram of another communications device according to an embodiment of the present invention.

The communications device 1200 may include:

an angle determining unit 1201, configured to communicate with a first device over a low-band communication link to determine a search angle;

a signal receiving unit 1202, configured to receive, in a direction indicated by the search angle, a first millimeter wave signal transmitted by the first device, where the first millimeter wave signal is a high frequency millimeter wave signal; and

a feedback unit 1203, configured to: after the signal receiving unit receives the first millimeter wave signal, send feedback information to the first device, so that after receiving the feedback information, the first device determines to implement millimeter wave phased-array beam alignment with the communications device in the direction indicated by the search angle.

In another embodiment, the feedback unit is specifically configured to: after the signal receiving unit receives the first millimeter wave signal, transmit a second millimeter wave signal in the direction indicated by the search angle, so that after receiving the second millimeter wave signal in the direction indicated by the search angle, the first device determines to implement millimeter wave phased-array beam alignment with the communications device in the direction indicated by the search angle, where the second millimeter wave signal is a high frequency millimeter wave signal.

In another embodiment, the feedback unit is specifically configured to: after the signal receiving unit receives the first millimeter wave signal, send the feedback information to the first device over the low-band communication link, where the feedback information is used to indicate that the communications device receives the first millimeter wave signal in the direction indicated by the search angle.

When multiple search angles are determined by the angle determining unit, the feedback information includes beam direction information of the first millimeter wave signal received by the signal receiving unit, so that after receiving the feedback information, the first device determines to implement millimeter wave phased-array beam alignment with the communications device in a beam direction that is of the first millimeter wave signal and in the feedback information.

In another embodiment, the signal receiving unit is further configured to: before the angle determining unit communicates with the first device over the low-band communication link to determine the search angle, when a distance between the communications device and the first device is less than or equal to a distance threshold, receive a wide beam millimeter wave signal transmitted by the first device, where the wide beam millimeter wave signal is a high frequency millimeter wave signal.

The feedback unit is further configured to: after the signal receiving unit receives the wide beam millimeter wave signal, send signal belonging information to the first device, where the signal belonging information includes an antenna sector of the first device to which the wide beam millimeter wave signal that is received by the communications device belongs, so that the first device determines an angle range, which is indicated by the antenna sector, as a search range.

The angle determining unit is specifically configured to communicate with the first device over the low-band communication link to determine the search angle within the search range.

In another embodiment, the communications device further includes:

a height information sending unit, configured to: before the angle determining unit communicates with the first device over the low-band communication link to determine the search angle, send height information of the communications device to the first device over the low-band communication link, so that the first device determines a search range according to height information of the first device and the height information of the communications device.

The angle determining unit is specifically configured to communicate with the first device over the low-band communication link to determine the search angle within the search range.

Referring to FIG. 13, FIG. 13 is a schematic structural diagram of another communications device according to an embodiment of the present invention.

The communications device 1300 may include:

a signal receiving unit 1301, configured to receive a millimeter wave signal transmitted by a first device, where the millimeter wave signal is a high frequency millimeter wave signal; and
a feedback unit 1302, configured to: after the signal receiving unit receives the millimeter wave signal, send feedback information to the first device over a low-band communication link, where the feedback information is used to indicate that the communications device receives the millimeter wave signal transmitted by the first device, so that after receiving the feedback information, the first device determines to implement millimeter wave phased-array beam alignment with the communications device in a transmitting direction of the millimeter wave signal.

The feedback information may include beam direction information of the millimeter wave signal received by the communications device, so that after receiving the feedback information, the first device determines to implement millimeter wave phased-array beam alignment with the communications device in a beam direction that is of the millimeter wave signal and in the feedback information.

In another embodiment, the signal receiving unit is further configured to: before the millimeter wave signal transmitted by the first device is received, when a distance between the communications device and the first device is less than or equal to a distance threshold, receive a wide beam millimeter wave signal transmitted by the first device, where the wide beam millimeter wave signal is a high frequency millimeter wave signal.

The feedback unit is further configured to: after the signal receiving unit receives the wide beam millimeter wave signal, send signal belonging information to the first device, where the signal belonging information includes an antenna sector of the first device to which the wide beam millimeter wave signal that is received by the communications device belongs, so that the first device determines an angle range, which is indicated by the antenna sector, as a search range.

The signal receiving unit is specifically configured to receive, within the search range, the millimeter wave signal transmitted by the first device.

In another embodiment, the communications device further includes:

a height information sending unit, configured to: before the signal receiving unit receives the millimeter wave signal transmitted by the first device, send height information of the communications device to the first device over the low-band communication link, so that the first device determines a search range according to height information of the first device and the height information of the communications device. The signal receiving unit is specifically configured to receive, within the search range, the millimeter wave signal transmitted by the first device.

Referring to FIG. 14, FIG. 14 is a schematic structural diagram of another communications device according to an embodiment of the present invention.

The communications device 1400 may include:

a signal receiving unit 1401, configured to receive a first millimeter wave signal transmitted by a first device within a determined search range; and

a signal transmitting unit 1402, configured to: after the signal receiving unit receives the first millimeter wave signal, transmit a second millimeter wave signal, so that after receiving the second millimeter wave signal, the first device determines to implement millimeter wave phased-array beam alignment with the communications device in a direction in which the second millimeter wave signal is received, where both the first millimeter wave signal and the second millimeter wave signal are high frequency millimeter wave signals.

In another embodiment, the signal receiving unit is further configured to: before the first millimeter wave signal transmitted by the first device within the determined search range is received, when a distance between the communications device and the first device is less than or equal to a distance threshold, receive a wide beam millimeter wave signal transmitted by the first device, where the wide beam millimeter wave signal is a high frequency millimeter wave signal.

The signal transmitting unit is further configured to: after the signal receiving unit receives the wide beam millimeter wave signal, send signal belonging information to the first device, where the signal belonging information includes an antenna sector of the first device to which the wide beam millimeter wave signal that is received by the communications device belongs, so that the first device determines an angle range, which is indicated by the antenna sector, as the search range.

In another embodiment, the communications device further includes:

a height information sending unit, configured to: before the signal receiving unit receives the first millimeter wave signal transmitted by the first device within the determined search range, send height information of the communications device to the first device over the low-band communication link, so that the first device determines the search range according to height information of the first device and the height information of the communications device.

An embodiment of the present invention further provides a millimeter wave phased-array beam alignment system, where the system may include the communications device according to the foregoing embodiment shown in FIG. 9 and the communications device according to the foregoing embodiment shown in FIG. 12.

An embodiment of the present invention further provides a millimeter wave phased-array beam alignment system, where the system may include the communications device according to the foregoing embodiment shown in FIG. 10 and the communications device according to the foregoing embodiment shown in FIG. 13.

An embodiment of the present invention further provides a millimeter wave phased-array beam alignment system, where the system may include the communications device according to the foregoing embodiment shown in FIG. 11 and the communications device according to the foregoing embodiment shown in FIG. 14.

For specific implementation of devices involved in the foregoing systems, refer to descriptions of the foregoing embodiments. Details are not described herein again.

An embodiment of the present invention further provides a communications device, where the communications device may include a transceiver, a memory, and a processor.

The transceiver is configured to: transmit a first millimeter wave signal according to a search angle to search for a second device; and receive feedback information sent by the second device, where the second device sends the feedback information after receiving the first millimeter wave signal from the search angle.

The memory stores a group of program code, and the processor is configured to invoke the program code stored in the memory, so as to perform the following operations:

communicating with the second device over a low-band communication link to determine the search angle; and

determining, after the feedback information is received, to implement millimeter wave phased-array beam alignment with the second device from the search angle.

An embodiment of the present invention further provides a communications device, where the communications device may include a transceiver, a memory, and a processor.

The transceiver is configured to: transmit a millimeter wave signal to search for a second device; and receive feedback information sent by the second device over a low-band communication link, where the feedback information is used to indicate that the second device receives the millimeter wave signal transmitted by the first device.

The memory stores a group of program code, and the processor is configured to invoke the program code stored in the memory, so as to perform the following operation:

determining, after the feedback information is received, to implement millimeter wave phased-array beam alignment with the second device from a transmitting angle from which the millimeter wave signal is transmitted.

An embodiment of the present invention further provides a communications device, where the communications device may include a transceiver, a memory, and a processor.

The transceiver receives a second millimeter wave signal transmitted by a second device, where the second device transmits the second millimeter wave signal after receiving a first millimeter wave signal; and transmits the first millimeter wave signal within a search range to search for the second device.

The memory stores a group of program code, and the processor is configured to invoke the program code stored in the memory, so as to perform the following operations:

determining the search range within which the second device is searched for; and determining, after the second millimeter wave signal is received, to implement millimeter wave phased-array beam alignment with the second device from a transmitting angle from which the first millimeter wave signal is transmitted.

An embodiment of the present invention further provides a communications device, where the communications device may include a transceiver, a memory, and a processor.

The transceiver is configured to: receive, from a search angle, a first millimeter wave signal transmitted by a first device; and after the first millimeter wave signal is received, send feedback information to the first device, so that after receiving the feedback information, the first device determines to implement millimeter wave phased-array beam alignment with the second device from the search angle.

The memory stores a group of program code, and the processor is configured to invoke the program code stored in the memory, so as to perform the following operation:

communicating with the first device over a low-band communication link to determine the search angle.

An embodiment of the present invention further provides a communications device, where the communications device may include a transceiver.

The transceiver is configured to: receive a millimeter wave signal transmitted by a first device; and after the millimeter wave signal is received, send feedback information to the first device over a low-band communication link, where the feedback information is used to indicate that the second device receives the millimeter wave signal transmitted by the first device, so that after receiving the feedback information, the first device determines to implement millimeter wave phased-array beam alignment with the second device from a transmitting angle from which the millimeter wave signal is transmitted.

An embodiment of the present invention further provides a communications device, where the communications device may include a transceiver.

The transceiver is configured to: receive a first millimeter wave signal transmitted by a first device within a determined search range; and after the first millimeter wave signal is received, transmit a second millimeter wave signal, so that after receiving the second millimeter wave signal, the first device determines to implement millimeter wave phased-array beam alignment with the second device from a transmitting angle from which the first millimeter wave signal is transmitted.

A person of ordinary skill in the art may be aware that, in combination with the examples described in the embodiments disclosed in this specification, units and algorithm steps can be implemented by electronic hardware or a combination of computer software and electronic hardware. Whether these functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for ease and brevity of description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the purposes of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium and includes several instructions for instructing a computer device (which may be a personal computer, a server, or a network device) or a processor (processor) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A millimeter wave phased-array beam alignment method, comprising:

    determining (501), by a first device, a search range within which a second device is searched for;
    transmitting (502), by the first device, a first millimeter wave signal within the search range to search for the second device;
    receiving (503), by the first device, a second millimeter wave signal transmitted by the second device, wherein the second device transmits the second millimeter wave signal after receiving the first millimeter wave signal; and
    determining (504), by the first device after receiving the second millimeter wave signal, to implement millimeter wave phased-array beam alignment with the second device in a direction in which the second millimeter wave signal is received; wherein
    both the first millimeter wave signal and the second millimeter wave signal are high frequency millimeter wave signals having a frequency of a frequency band from 20 GHz to 100 GHz; **characterized in that**
    the determining (501), by a first device, a search range within which a second device is searched for comprises:

    receiving, by the first device, height information of the second device over a lowband communication link, wherein a low frequency band from 30 MHz to 10 GHz is used as the low-band communication link; and
    determining, by the first device, the search range according to height information of the first device and the height information of the second device.

2. The method according to claim 1, wherein the determining (501), by a first device, a search range within which a second device is searched for comprises:

    when a distance between the first device and the second device is less than or equal to a distance threshold, transmitting, by the first device, a wide beam millimeter wave signal to search for the second device, wherein the wide beam millimeter wave signal is a high frequency millimeter wave signal having a frequency of a frequency band from 20 GHz to 100 GHz;
    receiving, by the first device, signal belonging information sent by the second device, wherein the signal belonging information comprises an antenna sector of the first device to which the wide beam millimeter wave signal that is received by the second device belongs; and
    determining, by the first device, an angle range, which is indicated by the antenna sector, as the search range,

3. A millimeter wave phased-array beam alignment method, comprising:

    receiving (801), by a second device, a first millimeter wave signal transmitted by a first device within a determined search range; and
    transmitting (802), by the second device after receiving the first millimeter wave signal, a second millimeter wave signal, so that after receiving the second millimeter wave signal, the first device determines to implement millimeter wave phased-array beam alignment with the second device in a direction in which the second millimeter wave signal is received, wherein both the first millimeter wave signal and the second millimeter wave signal are high frequency millimeter wave signals having a frequency of a frequency band from 20 GHz to 100 GHz; **characterized in that**
    before the receiving (801), by a second device, a first millimeter wave signal transmitted by a first device within a determined search range, the method further comprises:

    sending, by the second device, height information of the second device to the first device over a low-band communication link, so that the first device determines the search range according to height information of the first device and the height information of the second device, wherein a low frequency band from 30 MHz to 10 GHz is used as the low-band communication link.

4. The method according to claim 3, wherein before the receiving (801), by a second device, a first millimeter wave signal transmitted by a first device within a determined search range, the method further comprises:

when a distance between the second device and the first device is less than or equal to a distance threshold, receiving, by the second device, a wide beam millimeter wave signal transmitted by the first device, wherein the wide beam millimeter wave signal is a high frequency millimeter wave signal having a frequency of a frequency band from 20 GHz to 100 GHz; and

sending, by the second device after receiving the wide beam millimeter wave signal, signal belonging information to the first device, wherein the signal belonging information comprises an antenna sector of the first device to which the wide beam millimeter wave signal that is received by the second device belongs, so that the first device determines an angle range, which is indicated by the antenna sector, as the search range.

5. A communications device (1100), comprising:

a range determining unit (1101), configured to determine a search range within which a second device is searched for;

a signal transmitting unit (1102), configured to transmit a first millimeter wave signal within the search range to search for the second device;

a signal receiving unit (1103), configured to receive a second millimeter wave signal transmitted by the second device, wherein the second device transmits the second millimeter wave signal after receiving the first millimeter wave signal; and

an aligning unit (1104), configured to: after the second millimeter wave signal is received, determine to implement millimeter wave phased-array beam alignment with the second device in a direction in which the second millimeter wave signal is received; wherein

both the first millimeter wave signal and the second millimeter wave signal are high frequency millimeter wave signals having a frequency of a frequency band from 20 GHz to 100 GHz; **characterized in that**

the range determining unit (1101) comprises:

a receiving subunit, configured to receive height information of the second device over a low-band communication link, wherein a low frequency band from 30 MHz to 10 GHz is used as the low-band communication link; and

a determining subunit, configured to determine the search range according to height information of the communications device and the height information of the second device.

6. The communications (1100) device according to claim 5, wherein:

the range determining unit (1101) is specifically configured to: when a distance between the communications device and the second device is less than or equal to a distance threshold, transmit a wide beam millimeter wave signal to search for the second device, wherein the wide beam millimeter wave signal is a high frequency millimeter wave signal having a frequency of a frequency band from 20 GHz to 100 GHz; receive signal belonging information sent by the second device, wherein the signal belonging information comprises an antenna sector of the communications device to which the wide beam millimeter wave signal that is received by the second device belongs; and determine an angle range, which is indicated by the antenna sector, as the search range.

7. A communications device (1400), comprising:

a signal receiving unit (1401), configured to receive a first millimeter wave signal transmitted by a first device within a determined search range;

a signal transmitting unit (1402), configured to: after the signal receiving unit receives the first millimeter wave signal, transmit a second millimeter wave signal, so that after receiving the second millimeter wave signal, the first device determines to implement millimeter wave phased-array beam alignment with the communications device in a direction in which the second millimeter wave signal is received, wherein both the first millimeter wave signal and the second millimeter wave signal are high frequency millimeter wave signals having a frequency of a frequency band from 20 GHz to 100 GHz; **characterized by**

a height information sending unit, configured to: before the signal receiving unit receives the first millimeter wave signal transmitted by the first device within the determined search range, send height information of the communications device to the first device over the low-band communication link, so that the first device determines the search range according to height information of the first device and the height information of the communications device, wherein a low frequency band from 30 MHz to 10 GHz is used as the low-band communication link.

8. The communications device (1400) according to claim 7, wherein:

the signal receiving unit (1401) is further configured to: before the first millimeter wave signal transmitted by the first device within the determined search range is received, when a distance between the communications device and the first device is less than or equal to a distance threshold, receive a wide beam millimeter wave signal transmitted by the first device, wherein the wide beam millimeter wave signal is a high frequency millimeter wave signal having a frequency of a frequency band from 20 GHz to 100 GHz; and
the signal transmitting unit (1402) is further configured to: after the signal receiving unit receives the wide beam millimeter wave signal, send signal belonging information to the first device, wherein the signal belonging information comprises an antenna sector of the first device to which the wide beam millimeter wave signal that is received by the communications device belongs, so that the first device determines an angle range, which is indicated by the antenna sector, as the search range.

9. A millimeter wave phased-array beam alignment system, comprising the communications device (1100) according to any one of claims 5 and 6 and the communications device (1400) according to any one of claims 7 and 8.

**Patentansprüche**

1. Strahlausrichtungsverfahren für eine phasengesteuerte Millimeterwellen-Antennengruppe, das Folgendes umfasst:

Bestimmen (501) durch eine erste Vorrichtung eines Suchbereichs, innerhalb dessen nach einer zweiten Vorrichtung gesucht wird;
Übertragen (502) durch die erste Vorrichtung eines ersten Millimeterwellensignals innerhalb des Suchbereichs, um nach der zweiten Vorrichtung zu suchen;
Empfangen (503) durch die erste Vorrichtung eines zweiten Millimeterwellensignals, das durch die zweite Vorrichtung übertragen wird, wobei die zweite Vorrichtung das zweite Millimeterwellensignal nach dem Empfangen des ersten Millimeterwellensignals überträgt; und
Bestimmen (504) durch die erste Vorrichtung nach dem Empfangen des zweiten Millimeterwellensignals, Strahlausrichtung für eine phasengesteuerte Millimeterwellen-Antennengruppe innerhalb der zweiten Vorrichtung in einer Richtung, in der das zweite Millimeterwellensignal empfangen wird, zu implementieren; wobei sowohl das erste Millimeterwellensignal als auch das zweite Millimeterwellensignal Hochfrequenz-Millimeterwellensignale sind, die eine Frequenz eines Frequenzbands von 20 GHz bis 100 GHz aufweisen; **dadurch gekennzeichnet, dass**
das Bestimmen (501) durch eine erste Vorrichtung eines Suchbereichs, innerhalb dessen nach einer zweiten Vorrichtung gesucht wird, Folgendes umfasst:

Empfangen durch die erste Vorrichtung von Höheninformationen der zweiten Vorrichtung über eine Niederbandkommunikationsstrecke, wobei ein Niederfrequenzband von 30 MHz bis 10 GHz als die Niederbandkommunikationsstrecke verwendet wird; und
Bestimmen durch die erste Vorrichtung des Suchbereichs gemäß den Höheninformationen der ersten Vorrichtung und den Höheninformationen der zweiten Vorrichtung.

2. Verfahren nach Anspruch 1, wobei das Bestimmen (501) durch eine erste Vorrichtung eines Suchbereichs, innerhalb dessen nach einer zweiten Vorrichtung gesucht wird, Folgendes umfasst:

wenn ein Abstand zwischen der ersten Vorrichtung und der zweiten Vorrichtung kleiner als ein oder gleich einem Abstandsschwellenwert ist, Übertragen durch die erste Vorrichtung eines Breitstrahl-Millimeterwellensignals, um nach der zweiten Vorrichtung zu suchen, wobei das Breitstrahl-Millimeterwellensignal ein Hochfrequenz-Millimeterwellensignal ist, das eine Frequenz eines Frequenzbands von 20 GHz bis 100 GHz aufweist;
Empfangen durch die erste Vorrichtung, von signalzugehörigen Informationen, die durch die zweite Vorrichtung gesendet werden, wobei die signalzugehörigen Informationen einen Antennensektor der ersten Vorrichtung umfassen, zu dem das Breitstrahl-Millimeterwellensignal, das durch die zweite Vorrichtung empfangen wird, gehört; und

Bestimmen durch die erste Vorrichtung eines Winkelbereichs, der durch den Antennensektor angegeben ist, als den Suchbereich.

3. Strahlausrichtungsverfahren for eine phasengesteuerte Millimeterwellen-Antennengruppe, das Folgendes umfasst:

Empfangen (801) durch eine zweite Vorrichtung eines ersten Millimeterwellensignals, das durch eine erste Vorrichtung innerhalb eines bestimmten Suchbereichs übertragen wird; und Übertragen (802) durch die zweite Vorrichtung nach dem Empfangen des ersten Millimeterwellensignals eines zweiten Millimeterwellensignals, so dass die erste Vorrichtung nach dem Empfangen des zweite Millimeterwellensignals bestimmt, Strahlausrichtung für eine phasengesteuerte Millimeterwellen-Antennengruppe mit der zweiten Vorrichtung in einer Richtung, in der das zweite Millimeterwellensignal empfangen wird, zu implementieren, wobei sowohl das erste Millimeterwellensignal als auch das zweite Millimeterwellensignal Hochfrequenz-Millimeterwellensignale sind, die eine Frequenz eines Frequenzbands von 20 GHz bis 100 GHz aufweisen; **dadurch gekennzeichnet, dass** das Verfahren vor dem Empfangen (801) durch eine zweite Vorrichtung eines ersten Millimeterwellensignals, das durch eine erste Vorrichtung innerhalb eines bestimmten Suchbereichs übertragen wird, ferner Folgendes umfasst:

Senden durch die zweite Vorrichtung von Höheninformationen der zweiten Vorrichtung zu der ersten Vorrichtung über eine Niederbandkommunikationsstrecke, so dass die erste Vorrichtung den Suchbereich gemäß den Höheninformationen der ersten Vorrichtung und den Höheninformationen der zweiten Vorrichtung bestimmt, wobei ein Niederfrequenzband von 30 MHz bis 10 GHz als die Niederbandkommunikationsstrecke verwendet wird.

4. Verfahren nach Anspruch 3, wobei das Verfahren vor dem Empfangen (801) durch eine zweite Vorrichtung eines ersten Millimeterwellensignals, das durch eine erste Vorrichtung innerhalb eines bestimmten Suchbereichs übertragen wird, ferner Folgendes umfasst:

wenn ein Abstand zwischen der zweiten Vorrichtung und der ersten Vorrichtung kleiner als ein oder gleich einem Abstandsschwellenwert ist, Empfangen durch die zweite Vorrichtung eines Breitstrahl-Millimeterwellensignals, das durch die erste Vorrichtung übertragen wird, wo

bei das Breitstrahl-Millimeterwellensignal ein Hochfrequenz-Millimeterwellensignal ist, das eine Frequenz eines Frequenzbands von 20 GHz bis 100 GHz aufweist; und Senden durch die zweite Vorrichtung nach dem Empfangen des Breitstrahl-Millimeterwellensignals von signalzugehörigen Informationen zu der ersten Vorrichtung, wobei die signalzugehörigen Informationen einen Antennensektor der ersten Vorrichtung umfassen, zu dem das Breitstrahl-Millimeterwellensignal, das durch die zweite Vorrichtung empfangen wird, gehört, so dass die erste Vorrichtung einen Winkelbereich, der durch den Antennensektor angegeben ist, als den Suchbereich bestimmt.

5. Kommunikationsvorrichtung (1100), die Folgendes umfasst:

eine Bereichsbestimmungseinheit (1101), die konfiguriert ist, einen Suchbereich, innerhalb dessen nach einer zweiten Vorrichtung gesucht wird, zu bestimmen; eine Signalübertragungseinheit (1102), die konfiguriert ist, ein erstes Millimeterwellensignal innerhalb des Suchbereichs zu übertragen, um nach der zweiten Vorrichtung zu suchen; eine Signalempfangseinheit (1103), die konfiguriert ist, ein zweites Millimeterwellensignal, das durch die zweite Vorrichtung übertragen wird, zu empfangen, wobei die zweite Vorrichtung das zweite Millimeterwellensignal nach dem Empfangen des ersten Millimeterwellensignals überträgt; und eine Ausrichtungseinheit (1104), die konfiguriert ist: nachdem das zweite Millimeterwellensignal empfangen wird, zu bestimmen, Strahlausrichtung für eine phasengesteuerte Millimeterwellen-Antennengruppe mit der zweiten Vorrichtung in einer Richtung, in der das zweite Millimeterwellensignal empfangen wird, zu implementieren; wobei sowohl das erste Millimeterwellensignal als auch das zweite Millimeterwellensignal Hochfrequenz-Millimeterwellensignale sind, die eine Frequenz eines Frequenzbands von 20 GHz bis 100 GHz aufweisen; **dadurch gekennzeichnet, dass** die Bereichsbestimmungseinheit (1101) Folgendes umfasst:

eine Empfangsuntereinheit, die konfiguriert ist, Höheninformationen der zweiten Vorrichtung über eine Niederbandkommunikationsstrecke zu empfangen, wobei ein Niederfrequenzband von 30 MHz bis 10 GHz als die Niederbandkommunikationsstrecke verwendet wird; und eine Bestimmungsuntereinheit, die konfigu

riert ist, den Suchbereich gemäß den Höheninformationen der Kommunikationsvorrichtung und den Höheninformationen der zweiten Vorrichtung zu bestimmen.

**6.** Kommunikationsvorrichtung (1100) nach Anspruch 5, wobei:

die Bereichsbestimmungseinheit (1101) insbesondere konfiguriert ist: wenn ein Abstand zwischen der Kommunikationsvorrichtung und der zweiten Vorrichtung kleiner als ein oder gleich einem Abstandsschwellenwert ist, ein Breitstrahl-Millimeterwellensignal zu übertragen, um nach der zweiten Vorrichtung zu suchen, wobei das Breitstrahl-Millimeterwellensignal ein Hochfrequenz-Millimeterwellensignal ist, das eine Frequenz eines Frequenzbands von 20 GHz bis 100 GHz aufweist; signalzugehörige Informationen zu empfangen, die durch die zweite Vorrichtung gesendet werden, wobei die signalzugehörigen Informationen einen Antennensektor der Kommunikationsvorrichtung umfassen, zu dem das Breitstrahl-Millimeterwellensignal, das durch die zweite Vorrichtung empfangen wird, gehört; und einen Winkelbereich, der durch den Antennensektor angegeben ist, als den Suchbereich zu bestimmen.

**7.** Kommunikationsvorrichtung (1400), die Folgendes umfasst:

eine Signalempfangseinheit (1401), die konfiguriert ist, ein erstes Millimeterwellensignal zu empfangen, das durch eine erste Vorrichtung innerhalb eines bestimmten Suchbereichs übertragen wird;
eine Signalübertragungseinheit (1402), die konfiguriert ist: nachdem die Signalempfangseinheit das erste Millimeterwellensignal empfangen, ein zweites Millimeterwellensignal zu übertragen, so dass die erste Vorrichtung nach dem Empfangen des zweiten Millimeterwellensignals bestimmt, Strahlausrichtung für eine phasengesteuerte Millimeterwellen-Antennengruppe mit der Kommunikationsvorrichtung in einer Richtung, in der das zweite Millimeterwellensignal empfangen wird, zu implementieren, wobei sowohl das erste Millimeterwellensignal als auch das zweite Millimeterwellensignal Hochfrequenz-Millimeterwellensignale sind, die eine Frequenz eines Frequenzbands von 20 GHz bis 100 GHz aufweisen; **gekennzeichnet durch** eine Höheninformationssendeeinheit, die konfiguriert ist: bevor die Signalempfangseinheit das erste Millimeterwellensignal empfängt, das **durch** die erste Vorrichtung innerhalb des bestimmten Suchbereichs übertragen wird, Höheninformationen der Kommunikationsvorrichtung zu der ersten Vorrichtung über die Niederbandkommunikationsstrecke zu senden, so dass die erste Vorrichtung den Suchbereich gemäß den Höheninformationen der ersten Vorrichtung und den Höheninformationen der Kommunikationsvorrichtung bestimmt, wobei ein Niederfrequenzband von 30 MHz bis 10 GHz als die Niederbandkommunikationsstrecke verwendet wird.

**8.** Kommunikationsvorrichtung (1400) nach Anspruch 7, wobei:

die Signalempfangseinheit (1401) ferner konfiguriert ist: bevor das erste Millimeterwellensignal, das durch die erste Vorrichtung innerhalb des bestimmten Suchbereichs übertragen wird, empfangen wird, wenn ein Abstand zwischen der Kommunikationsvorrichtung und der ersten Vorrichtung kleiner als ein oder gleich einem Abstandsschwellenwert ist, ein Breitstrahl-Millimeterwellensignal zu empfangen, das durch die erste Vorrichtung übertragen wird, wobei das Breitstrahl-Millimeterwellensignal ein Hochfrequenz-Millimeterwellensignal ist, das eine Frequenz eines Frequenzbands von 20 GHz bis 100 GHz aufweist; und
die Signalübertragungseinheit (1402) ferner konfiguriert ist: nachdem die Signalempfangseinheit das Breitstrahl-Millimeterwellensignal empfängt, signalzugehörige Informationen zu der ersten Vorrichtung zu senden, wobei die signalzugehörigen Informationen einen Antennensektor der ersten Vorrichtung umfassen, zu dem das Breitstrahl-Millimeterwellensignal, das durch die Kommunikationsvorrichtung empfangen wird, gehört, so dass die erste Vorrichtung einen Winkelbereich, der durch den Antennensektor angegeben ist, als den Suchbereich bestimmt.

**9.** Strahlausrichtungssystem für eine phasengesteuerte Millimeterwellen-Antennengruppe, das die Kommunikationsvorrichtung (1100) nach einem der Ansprüche 5 und 6 und die Kommunikationsvorrichtung (1400) nach einem der Ansprüche 7 und 8 umfasst.

**Revendications**

**1.** Procédé d'alignement de faisceau d'antenne réseau à commande de phase à ondes millimétriques, comprenant les opérations consistant à :

faire déterminer (501), par un premier dispositif, une plage de recherche au sein de laquelle un deuxième dispositif fait l'objet d'une recherche ;

faire transmettre (502), par le premier dispositif, un premier signal d'ondes millimétriques au sein de la plage de recherche afin de rechercher le deuxième dispositif ;

faire recevoir (503), par le premier dispositif, un deuxième signal d'ondes millimétriques transmis par le deuxième dispositif, le deuxième dispositif transmettant le deuxième signal d'ondes millimétriques après avoir reçu le premier signal d'ondes millimétriques ; et

faire déterminer (504), par le premier dispositif après avoir reçu le deuxième signal d'ondes millimétriques, de mettre en oeuvre l'alignement de faisceau d'antenne réseau à commande de phase à ondes millimétriques avec le deuxième dispositif suivant un sens dans lequel le deuxième signal d'ondes millimétriques est reçu ;

à la fois le premier signal d'ondes millimétriques et le deuxième signal d'ondes millimétriques étant des signaux d'ondes millimétriques à hautes fréquences ayant une fréquence parmi une bande de fréquences allant de 20 GHz à 100 GHz ; **caractérisé en ce que**

la détermination (501), par un premier dispositif, d'une plage de recherche au sein de laquelle un deuxième dispositif fait l'objet d'une recherche, comprend :

la réception, par le premier dispositif, d'informations de hauteur du deuxième dispositif sur une liaison de communications à bande inférieure, une bande de fréquences basses allant de 30 MHz à 10 GHz étant utilisée en tant que liaison de communications à bande inférieure ; et

la détermination, par le premier dispositif, de la plage de recherche en conformité avec des informations de hauteur du premier dispositif et les informations de hauteur du deuxième dispositif.

2.  Procédé selon la revendication 1, la détermination (501), par un premier dispositif, d'une plage de recherche au sein de laquelle un deuxième dispositif fait l'objet d'une recherche, comprenant :

lorsqu'une distance entre le premier dispositif et le deuxième dispositif est inférieure ou égale à un seuil de distance, faire transmettre, par le premier dispositif, un signal d'ondes millimétriques à large faisceau afin de rechercher le deuxième dispositif, le signal d'ondes millimétriques à large faisceau étant un signal d'ondes millimétriques à hautes fréquences ayant une fréquence parmi une bande de fréquences allant de 20 GHz à 100 GHz;

faire recevoir, par le premier dispositif, des informations appartenant au signal envoyées par le deuxième dispositif, les informations appartenant au signal comprenant un secteur d'antenne du premier dispositif auquel appartient le signal d'ondes millimétriques à large faisceau qui est reçu par le deuxième dispositif ; et

faire déterminer, par le premier dispositif, une plage d'angles, laquelle est indiquée par le secteur d'antenne, en tant que plage de recherche.

3.  Procédé d'alignement de faisceau d'antenne réseau à commande de phase à ondes millimétriques, comprenant les opérations consistant à :

faire recevoir (801), par un deuxième dispositif, un premier signal d'ondes millimétriques transmis par un premier dispositif au sein d'une plage de recherche déterminée ; et

faire transmettre (802), par le deuxième dispositif après avoir reçu le premier signal d'ondes millimétriques, un deuxième signal d'ondes millimétriques, de sorte qu'après avoir reçu le deuxième signal d'ondes millimétriques, le premier dispositif détermine de mettre en oeuvre l'alignement de faisceau d'antenne réseau à commande de phase à ondes millimétriques avec le deuxième dispositif suivant un sens dans lequel le deuxième signal d'ondes millimétriques est reçu, à la fois le premier signal d'ondes millimétriques et le deuxième signal d'ondes millimétriques étant des signaux d'ondes millimétriques à hautes fréquences ayant une fréquence parmi une bande de fréquences allant de 20 GHz à 100 GHz ; **caractérisé en ce que** avant la réception (801), par un deuxième dispositif, d'un premier signal d'ondes millimétriques transmis par un premier dispositif au sein d'une plage de recherche déterminée, le procédé comprend en outre :

l'envoi, par le deuxième dispositif, d'informations de hauteur du deuxième dispositif vers le premier dispositif sur une liaison de communications à bande inférieure, de sorte que le premier dispositif détermine la plage de recherche en conformité avec des informations de hauteur du premier dispositif et les informations de hauteur du deuxième dispositif, une bande de fréquences basses allant de 30 MHz à 10 GHz étant utilisée en tant que liaison de communications à bande inférieure.

4.  Procédé selon la revendication 3, avant la réception (801), par un deuxième dispositif, d'un premier signal d'ondes millimétriques transmis par un premier dispositif au sein d'une plage de recherche déterminée, le procédé comprenant en outre :

lorsqu'une distance entre le deuxième dispositif et le premier dispositif est inférieure ou égale à un seuil de distance, faire recevoir, par le deuxième dispositif, un signal d'ondes millimétriques à large faisceau transmis par le premier dispositif, le signal d'ondes millimétriques à large faisceau étant un signal d'ondes millimétriques à hautes fréquences ayant une fréquence parmi une bande de fréquences allant de 20 GHz à 100 GHz ; et

faire envoyer, par le deuxième dispositif après avoir reçu le signal d'ondes millimétriques à large faisceau, des informations appartenant au signal vers le premier dispositif, les informations appartenant au signal comprenant un secteur d'antenne du premier dispositif auquel appartient le signal d'ondes millimétriques à large faisceau qui est reçu par le deuxième dispositif, de sorte que le premier dispositif détermine une plage d'angles, laquelle est indiquée par le secteur d'antenne, en tant que plage de recherche.

5. Dispositif de communications (1100), comprenant :

une unité de détermination de portée (1101), configurée de façon à déterminer une plage de recherche au sein de laquelle un deuxième dispositif fait l'objet d'une recherche ;
une unité de transmission de signaux (1102), configurée de façon à transmettre un premier signal d'ondes millimétriques au sein de la plage de recherche afin de rechercher le deuxième dispositif ;
une unité de réception de signaux (1103), configurée de façon à recevoir un deuxième signal d'ondes millimétriques transmis par le deuxième dispositif, le deuxième dispositif transmettant le deuxième signal d'ondes millimétriques après avoir reçu le premier signal d'ondes millimétriques ; et
une unité d'alignement (1104), configurée de façon à: après que le deuxième signal d'ondes millimétriques a été reçu, déterminer de mettre en oeuvre l'alignement de faisceau d'antenne réseau à commande de phase à ondes millimétriques avec le deuxième dispositif suivant un sens dans lequel le deuxième signal d'ondes millimétriques est reçu ;
à la fois le premier signal d'ondes millimétriques et le deuxième signal d'ondes millimétriques étant des signaux d'ondes millimétriques à hautes fréquences ayant une fréquence parmi une bande de fréquences allant de 20 GHz à 100 GHz **caractérisé en ce que** l'unité de détermination de portée (1101) comprend :

une sous-unité de réception, configurée de façon à recevoir des informations de hauteur du deuxième dispositif sur une liaison de communications à bande inférieure, une bande de fréquences basses allant de 30 MHz à 10 GHz étant utilisée en tant que liaison de communications à bande inférieure ; et
une sous-unité de détermination, configurée de façon à déterminer la plage de recherche en conformité avec des informations de hauteur du dispositif de communications et les informations de hauteur du deuxième dispositif.

6. Dispositif de communications (1100) selon la revendication 5 :

l'unité de détermination de portée (1101) étant spécifiquement configurée de façon à:

lorsqu'une distance entre le dispositif de communications et le deuxième dispositif est inférieure ou égale à un seuil de distance, transmettre un signal d'ondes millimétriques à large faisceau afin de rechercher le deuxième dispositif, le signal d'ondes millimétriques à large faisceau étant un signal d'ondes millimétriques à hautes fréquences ayant une fréquence parmi une bande de fréquences allant de 20 GHz à 100 GHz ; recevoir des informations appartenant au signal envoyées par le deuxième dispositif, les informations appartenant au signal comprenant un secteur d'antenne du dispositif de communications auquel appartient le signal d'ondes millimétriques à large faisceau qui est reçu par le deuxième dispositif ; et déterminer une plage d'angles, laquelle est indiquée par le secteur d'antenne, en tant que plage de recherche.

7. Dispositif de communications (1400), comprenant :

une unité de réception de signaux (1401), configurée de façon à recevoir un premier signal d'ondes millimétriques transmis par un premier dispositif au sein d'une plage de recherche déterminée ;
une unité de transmission de signaux (1402), configurée de façon à : après que l'unité de réception de signaux a reçu le premier signal d'ondes millimétriques, transmettre un deuxième signal d'ondes millimétriques de sorte qu'après avoir reçu le deuxième signal d'ondes millimétriques, le premier dispositif détermine de mettre en oeuvre l'alignement de faisceau d'antenne réseau à commande de phase à ondes millimétriques avec le dispositif de communications suivant un sens dans lequel le deuxième signal d'ondes millimétriques est reçu, à la fois le premier signal d'ondes millimétriques et le deuxième signal d'ondes millimétriques étant des signaux d'ondes millimétriques à hautes fréquences ayant une fréquence parmi une bande de fréquences allant de 20 GHz à 100 GHz ; **caractérisé par**

une unité d'envoi d'informations de hauteur, configurée de façon à : avant que l'unité de réception de signaux ne reçoive le premier signal d'ondes millimétriques transmis par le premier dispositif au sein de la plage de recherche déterminée, envoyer des informations de hauteur du dispositif de communications vers le premier dispositif sur la liaison de communications à bande inférieure, de sorte que le premier dispositif détermine la plage de recherche en conformité avec des informations de hauteur du premier dispositif et les informations de hauteur du dispositif de communications, une bande de fréquences basses allant de 30 MHz à 10 GHz étant utilisée en tant que liaison de communications à bande inférieure.

8.  Dispositif de communications (1400) selon la revendication 7 :

    l'unité de réception de signaux (1401) étant configurée en outre de façon à : avant que ne soit reçu le premier signal d'ondes millimétriques transmis par le premier dispositif au sein de la plage de recherche déterminée, lorsqu'une distance entre le dispositif de communications et le premier dispositif est inférieure ou égale à une distance seuil, recevoir un signal d'ondes millimétriques à large faisceau transmis par le premier dispositif, le signal d'ondes millimétriques à large faisceau étant un signal d'ondes millimétriques à hautes fréquences ayant une fréquence parmi une bande de fréquences allant de 20 GHz à 100 GHz ; et
    l'unité de transmission de signaux (1402) étant configurée en outre de façon à : après que l'unité de réception de signaux a reçu le signal d'ondes millimétriques à large faisceau, envoyer des informations appartenant au signal vers le premier dispositif, les informations appartenant au signal comprenant un secteur d'antenne du premier dispositif auquel appartient le signal d'ondes millimétriques à large faisceau qui est reçu par le dispositif de communications, de sorte que le premier dispositif détermine une plage d'angles, laquelle est indiquée par le secteur d'antenne, en tant que plage de recherche.

9.  Système d'alignement de faisceau d'antenne réseau à commande de phase à ondes millimétriques, comprenant le dispositif de communications (1100) selon l'une quelconque des revendications 5 et 6, et le dispositif de communications (1400) selon l'une quelconque des revendications 7 et 8.

| A first device communicates with a second device over a low-band communication link to determine a search angle | 101 |

↓

| The first device transmits a first millimeter wave signal according to a direction indicated by the search angle determined in step 101, to search for the second device | 102 |

↓

| The first device receives feedback information sent by the second device, where the second device sends the feedback information after receiving the first millimeter wave signal in the direction indicated by the search angle | 103 |

↓

| After receiving the feedback information, the first device determines to implement millimeter wave phased-array beam alignment with the second device from the search angle and in the direction indicated by the search angle | 104 |

FIG. 1

FIG. 2a

FIG. 2b

FIG. 2c

2.4/5GHz
Answer

FIG. 2d

| A first device receives height information of a second device over a low-band communication link | 301 |

| The first device determines a search range according to height information of the first device and the height information of the second device | 302 |

FIG. 3

A first device transmits a millimeter wave signal to search for a second device — 401

The first device receives a feedback signal that is sent by the second device over a low-band communication link, where the feedback signal is used to indicate that the second device receives the millimeter wave signal transmitted by the first device — 402

After receiving the feedback information, the first device determines to implement millimeter wave phased-array beam alignment with the second device from a transmitting angle from which the millimeter wave signal is transmitted and in a transmitting direction of the millimeter wave signal — 403

FIG. 4

EP 2 945 411 B1

| A first device determines a search range within which a second device is searched for | ⟋ 501 |

↓

| The first device transmits a first millimeter wave signal within the search range to search for the second device | ⟋ 502 |

↓

| The first device receives a second millimeter wave signal transmitted by the second device, where the second device transmits the second millimeter wave signal after receiving the first millimeter wave signal | ⟋ 503 |

↓

| After receiving the second millimeter wave signal, the first device determines to implement millimeter wave phased-array beam alignment with the second device from a transmitting angle from which the first millimeter wave signal is transmitted and in a direction in which the second millimeter wave signal is received | ⟋ 504 |

FIG. 5a

FIG. 5b

38

A second device communicates with a first device over a low-band communication link to determine a search angle ⟍ 601

The second device receives, in a direction indicated by the search angle, a first millimeter wave signal transmitted by the first device ⟍ 602

After receiving the first millimeter wave signal, the second device sends feedback information to the first device, so that after receiving the feedback information, the first device determines to implement millimeter wave phased-array beam alignment with the second device from the search angle and in the direction indicated by the search angle ⟍ 603

FIG. 6

A second device receives a millimeter wave signal transmitted by a first device ⟍ 701

After receiving the millimeter wave signal, the second device sends feedback information to the first device over a low-band communication link, where the feedback information is used to indicate that the second device receives the millimeter wave signal transmitted by the first device, so that after receiving the feedback information, the first device determines to implement millimeter wave phased-array beam alignment with the second device from a transmitting angle from which the millimeter wave signal is transmitted and in a transmitting direction of the millimeter wave signal ⟍ 702

FIG. 7

A second device receives a first millimeter wave signal transmitted by a first device within a determined search range — 801

After receiving the first millimeter wave signal, the second device transmits a second millimeter wave signal, so that after receiving the second millimeter wave signal, the first device determines to implement millimeter wave phased-array beam alignment with the second device from a transmitting angle from which the first millimeter wave signal is transmitted and in a direction in which the second millimeter wave signal is received — 802

FIG. 8

900

Angle determining unit — 901

Signal transmitting unit — 902

Signal receiving unit — 903

Aligning unit — 904

FIG. 9

1000

| Signal transmitting unit | 1001 |

| Signal receiving unit | 1002 |

| Aligning unit | 1003 |

FIG. 10

1100

| Range determining unit | 1101 |

| Signal transmitting unit | 1102 |

| Signal receiving unit | 1103 |

| Aligning unit | 1104 |

FIG. 11

```
                                    ┌─ 1200
┌ ─ ─ ─ ─ ─ ─ ─ ─ ─ ─ ┐
│   ┌─────────────────┐ │
│   │ Angle determining │ ├─ 1201
│   │      unit          │ │
│   └─────────────────┘ │
│                        │
│   ┌─────────────────┐ │
│   │ Signal receiving unit │ ├─ 1202
│   └─────────────────┘ │
│                        │
│   ┌─────────────────┐ │
│   │   Feedback unit    │ ├─ 1203
│   └─────────────────┘ │
└ ─ ─ ─ ─ ─ ─ ─ ─ ─ ─ ┘
```

FIG. 12

```
                                    ┌─ 1300
┌ ─ ─ ─ ─ ─ ─ ─ ─ ─ ─ ┐
│   ┌─────────────────┐ │
│   │ Signal receiving unit │ ├─ 1301
│   └─────────────────┘ │
│                        │
│   ┌─────────────────┐ │
│   │   Feedback unit    │ ├─ 1302
│   └─────────────────┘ │
└ ─ ─ ─ ─ ─ ─ ─ ─ ─ ─ ┘
```

FIG. 13

```
                                    ┌─ 1400
┌ ─ ─ ─ ─ ─ ─ ─ ─ ─ ─ ┐
│   ┌─────────────────┐ │
│   │ Signal receiving unit │ ├─ 1401
│   └─────────────────┘ │
│                        │
│   ┌─────────────────┐ │
│   │ Signal transmitting │ ├─ 1402
│   │      unit          │ │
│   └─────────────────┘ │
└ ─ ─ ─ ─ ─ ─ ─ ─ ─ ─ ┘
```

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2238695 B1

**Non-patent literature cited in the description**

- Beam codebook based beamforming protocol for multi-Gbps millimeter-wave WPAN systems. **JUNYI WANG et al.** IEEE JOURNAL ON SELECTED AREAS IN COMMUNIATIONS. IEEE SERVICE CENTER, 01 October 2009, vol. 27, 1390-1399